# EUROPEAN PATENT APPLICATION

(11) **EP 4 790 957 A1**
(43) Date of publication of application: **12.08.2026**
(21) Application number: 24881513.6
(22) Date of filing: 17.10.2024
(51) Int. Cl.: H04L 27/34

(54) **COMMUNICATION METHOD AND APPARATUS, AND READABLE STORAGE MEDIUM**

(30) Priority: 24.10.2023 CN 202311387195
(71) Applicant: HUAWEI TECHNOLOGIES CO., LTD., Shenzhen 518129 (CN)
(72) Inventor: HAN, Xiao, Shenzhen, Guangdong 518129 (CN); DU, Zhen, Shanghai 200131 (CN); YANG, Xiaobo, Shenzhen, Guangdong 518129 (CN); LIU, Fan, Shanghai 200131 (CN); DU, Rui, Shenzhen, Guangdong 518129 (CN); HUANG, Lei, Shenzhen, Guangdong 518129 (CN)
(74) Representative: Pfenning, Meinig & Partner mbB
(86) International application number: PCT/CN2024/125599
(87) International publication number: WO 2025/087148

(57) **Abstract**

This application relates to the wireless communication field, and is applied to an integrated sensing and communication system, and in particular, to a communication method and apparatus, and a readable storage medium. The method includes: The communication apparatus generates first information and sends the first information, where the first information indicates a probability of one or more constellation points of constellation shaping, and the probability of the constellation point of constellation shaping is obtained through joint optimization of communication performance and sensing performance. This application can support both communication and sensing, and further improve the sensing performance while the communication performance is considered.

## Description

This application claims priority to Chinese Patent Application No. 202311387195.5, filed with the China National Intellectual Property Administration on October 24, 2023 and entitled "COMMUNICATION METHOD AND APPARATUS, AND READABLE STORAGE MEDIUM", which is incorporated herein by reference in its entirety.

### TECHNICAL FIELD

This application relates to the field of wireless communication technologies, and in particular, to a communication method and apparatus, and a readable storage medium.

### BACKGROUND

Both wireless communication and wireless sensing are based on an electromagnetic wave theory, and an electromagnetic wave signal almost achieves seamless coverage in human activities. At a transmitter, the electromagnetic wave signal is modulated, so that an electromagnetic wave carries source information, and the electromagnetic wave signal is affected by a wireless environment in a propagation process, that is, the electromagnetic wave signal is modulated by the environment, and therefore also carries environment information. At a receiver, the electromagnetic wave signal is analyzed, to not only obtain the carried source information, but also extract sensing information that reflects a propagation environment characteristic. In other words, the electromagnetic wave signal has both a communication function and a sensing function, which makes integrated sensing and communication possible. Compared with a system in which sensing and communication are separated, an integrated sensing and communication system can bring many advantages, for example, reducing costs, reducing a device size, reducing power consumption, improving spectral efficiency, and reducing mutual interference between communication and sensing.

Integrated sensing and communication (integrated sensing and communication, ISAC) may be understood as a new information processing technology and a new service technology that implement collaboration between a communication function and a sensing function based on software and hardware resource sharing or information sharing, and aims to support both the communication function and the sensing function on a same spectrum and a same device. A wireless fidelity (wireless fidelity, Wi-Fi) sensing (Wi-Fi sensing) system is a possible implementation of the integrated sensing and communication (ISAC) system, and can implement both the communication function and the sensing function via existing widely deployed Wi-Fi devices.

Currently, it is proposed that sensing may be performed via a communication signal. However, the existing communication signal has poor sensing performance, and cannot meet a sensing requirement.

### SUMMARY

Embodiments of this application provide a communication method and apparatus, and a readable storage medium, to support both communication and sensing, and improve sensing performance while communication performance is considered.

The following describes this application from different aspects. It should be understood that the following implementations and beneficial effect of the different aspects may be mutually referenced.

According to a first aspect, this application provides a communication method. The method is applied to a first communication apparatus. The method includes: generating first information and sending the first information, where the first information may indicate a probability of one or more constellation points of constellation shaping (in one or more modulation schemes).

For example, the probability of the one or more constellation points of constellation shaping may be obtained through joint optimization of communication performance and sensing performance. For details, refer to descriptions of the following embodiments. Details are not described herein.

For example, the plurality of constellation points of constellation shaping may be constellation points in one modulation scheme, or may be constellation points in a plurality of modulation schemes. For example, a waveform corresponding to the constellation points of constellation shaping may be used for both data transmission and sensing measurement.

The modulation scheme in this application may include but is not limited to quadrature amplitude modulation (quadrature amplitude modulation, QAM), and QAM includes two types: a uniform constellation modulation and a non-uniform constellation modulation (non-uniform Constellation, NUC). In this application, QAM of different modulation orders may be understood as different modulation schemes. For example, 16QAM and 64QAM may be understood as two different modulation schemes.

Because probabilities of constellation points in an M-QAM constellation diagram in an existing communication system are equal and are (1/M), the existing communication system needs to indicate only a modulation scheme during data transmission. However, in this application, it is considered that probabilities of constellation points after constellation shaping may be unequal. Therefore, in this application, probabilities of constellation points of constellation shaping are aligned via the first information. This can support both communication and sensing, and further improve the sensing performance while the communication performance is considered. For specific implementation of constellation shaping, refer to descriptions of the following embodiments.

With reference to the first aspect, in a possible implementation, the probability of the one or more constellation points of constellation shaping is predefined or determined based on a predefined probability range.

For example, for one modulation scheme, probabilities of a plurality of constellation points of constellation shaping may be equal or unequal. If the probabilities of the constellation points of constellation shaping are equal, the first information may indicate a probability of one constellation point of constellation shaping, or may indicate probabilities of a plurality of constellation points of constellation shaping (the probabilities of the plurality of constellation points are equal). This is not limited in this application. If there are constellation points with unequal probabilities in the constellation points of constellation shaping, in other words, probabilities of at least two constellation points of constellation shaping are unequal, the first information may indicate the probabilities of the plurality of constellation points of constellation shaping.

With reference to the first aspect, in a possible implementation, that the first communication apparatus sends the first information may be: The first communication apparatus sends the first information via a first message. For example, the first communication apparatus sends the first message, where the first message includes the first information, and the first message may be used to request to enable a constellation shaping function.

For example, the first message may be a frame in a Wi-Fi communication system, or signaling in a cellular communication system. This is not limited in this application.

In this application, the constellation shaping function is enabled via one message. This can better be compatible with a conventional device (for example, a device that does not support both communication and sensing), and the communication performance can also be maintained when sensing is not required (for example, before the constellation shaping function is enabled).

With reference to the first aspect, in a possible implementation, the first message further includes second information, and the second information may indicate one or more modulation schemes. Correspondingly, the first information specifically indicates a probability of one or more constellation points of constellation shaping in the one or more modulation schemes.

In this application, one message may indicate probabilities of one or more constellation points of constellation shaping in a plurality of modulation schemes, so that an appropriate modulation scheme and a probability of one or more constellation points of constellation shaping in the modulation scheme can be selected subsequently based on a channel environment change. This helps improve the communication performance and the sensing performance.

With reference to the first aspect, in a possible implementation, the first message further includes one or more of the following: third information, fourth information, or fifth information. The third information indicates to enable the constellation shaping function. The fourth information indicates duration of enabling the constellation shaping function. It may be understood that the constellation shaping function may be automatically disabled after the duration expires. The fifth information indicates a number of physical layer protocol data units (physical layer protocol data unit, PPDU) using the constellation shaping function. It may be understood that, after the same number of PPDUs are sent, the constellation shaping function may be automatically disabled.

In this application, the first message carries the duration or the number of PPDUs of constellation shaping. After the duration expires or the same number of PPDUs are sent, the constellation shaping function may be automatically disabled without sending additional signaling. This can save air interface resources.

With reference to the first aspect, in a possible implementation, before the first communication apparatus sends the first information, the method further includes: The first communication apparatus sends a first message, where the first message is used to request to enable a constellation shaping function. In other words, a message carrying the first information is different from the first message.

In this application, the constellation shaping function is enabled via one message. This can better be compatible with a conventional device (for example, a device that does not support both communication and sensing), and the communication performance can also be maintained when sensing is not required (for example, before the constellation shaping function is enabled).

With reference to the first aspect, in a possible implementation, after the first communication apparatus sends the first message, the method further includes: The first communication apparatus receives a second message, where the second message includes sixth information, and the sixth information indicates whether the second communication apparatus agrees to enable the constellation shaping function.

For example, the second message may be a frame in the Wi-Fi communication system, or signaling in the cellular communication system. This is not limited in this application. It may be understood that, if the first message is a frame in the Wi-Fi communication system, correspondingly, the second message is also a frame in the Wi-Fi communication system. If the first message is signaling in the cellular communication system, correspondingly, the second message is also signaling in the cellular communication system.

For example, the first message is a sensing measurement request frame, and the second message is a sensing measurement response frame.

In this application, when the first communication apparatus requests to enable the constellation shaping function, whether a peer end agrees to enable the constellation shaping function is indicated via one message. In this way, implementation is flexible.

With reference to the first aspect, in a possible implementation, after the first communication apparatus sends the first message, the method further includes: The first communication apparatus sends or receives a third message, where the third message is used to disable the constellation shaping function.

For example, the third message may be a frame in the Wi-Fi communication system, or signaling in the cellular communication system. This is not limited in this application. It may be understood that, if the first message is a frame in the Wi-Fi communication system, correspondingly, the third message is also a frame in the Wi-Fi communication system. If the first message is signaling in the cellular communication system, correspondingly, the third message is also signaling in the cellular communication system.

For example, the first message is a sensing measurement request frame, the second message is a sensing measurement response frame, and the third message is a sensing measurement session termination frame.

In this application, after the constellation shaping function is enabled, the constellation shaping function can be disabled via one message. The communication performance can be maintained when sensing is not required (for example, after the constellation shaping function is disabled), and communication quality can be improved.

With reference to the first aspect, in a possible implementation, after the first communication apparatus sends the first information, the method further includes: The first communication apparatus sends or receives a fourth message. When a modulation scheme used for the fourth message is a first modulation scheme, it indicates that constellation shaping is performed on the fourth message. The first modulation scheme may be QAM of various modulation orders.

For example, the fourth message may be a PPDU, and the modulation scheme used for the PPDU is the first modulation scheme. In this case, a physical layer payload of the PPDU may include a modulation symbol obtained by performing constellation shaping on a bitstream based on a probability of one or more constellation points in the first modulation scheme indicated by the first information. It may be understood that a physical layer header (PHY header) of the PPDU includes a modulation and coding scheme (modulation and coding scheme, MCS), and the MCS may indicate a modulation scheme and a rate that are used for the PPDU.

In this application, whether constellation shaping is performed on the PPDU is implicitly indicated via the modulation scheme used for the PPDU, and no additional indication information is required. Therefore, data transmission completed by a device that supports only communication may not be affected.

With reference to the first aspect, in a possible implementation, after the first communication apparatus sends the first information, the method further includes: The first communication apparatus sends or receives a fourth message, where the fourth message includes indication information, and the indication information may indicate whether constellation shaping is performed on the fourth message.

For example, the fourth message may be a PPDU, the indication information indicates that constellation shaping is performed on the PPDU, and a modulation scheme used for the PPDU is a first modulation scheme. In this case, a physical layer payload of the PPDU may include a modulation symbol obtained by performing constellation shaping on a bitstream based on a probability of one or more constellation points in the first modulation scheme indicated by the first information. It may be understood that a physical layer header (PHY Header) of the PPDU includes an MCS, and the MCS may indicate a modulation scheme and a rate that are used for the PPDU.

In this application, the indication information is carried in the PPDU to indicate whether constellation shaping is performed on the PPDU. A meaning of the indication information is clear.

With reference to the first aspect, in a possible implementation, after the first communication apparatus sends the first information, the method further includes: The first communication apparatus sends or receives a fourth message on a specific resource. When a modulation scheme used for the fourth message is a first modulation scheme, it indicates that constellation shaping is performed on the fourth message. The first modulation scheme may be QAM of various modulation orders. The specific resource may be indicated via a time-frequency location and/or an antenna port.

For example, the fourth message may be a reference signal, a control channel, or a data channel. The modulation scheme for the fourth message is the first modulation scheme. In this case, the fourth message may include a modulation symbol obtained by performing constellation shaping on a bitstream based on a probability of one or more constellation points in the first modulation scheme indicated by the first information.

In this application, that constellation shaping is performed on the fourth message is indicated by sending or receiving the fourth message on the specific resource. In this way, both cellular communication and sensing can be supported.

With reference to the first aspect, in a possible implementation, the first information may be in the physical layer header of the PPDU. In this case, the first information may indicate a probability of one or more constellation points of constellation shaping of the PPDU.

For example, the physical layer header of the PPDU further includes seventh information, and the seventh information is a first value, and indicates that constellation shaping is performed on the PPDU.

This application provides another implementation. Whether probability shaping is performed on the PPDU and the probability of the one or more constellation points of constellation shaping of the PPDU are exchanged via the PHY header of the PPDU.

With reference to the first aspect, in a possible implementation, the probability of the constellation point of constellation shaping may be represented by an index. For example, one index corresponds to probabilities of a group of constellation points of constellation shaping. The first information includes a constellation shaping mode index, and one constellation shaping mode index corresponds to probabilities of a group of constellation points of constellation shaping.

For another example, one index may alternatively correspond to probabilities of one or more groups of constellation points of constellation shaping. The first information includes a constellation shaping mode index, and the constellation shaping mode index and the modulation scheme used for the PPDU may be used to determine the probability of the one or more constellation points of constellation shaping of the PPDU. One constellation shaping mode index corresponds to probabilities of one or more groups of constellation points of constellation shaping.

In this application, the probability of the constellation point of constellation shaping is represented by the index, so that a number of bits for indication can be reduced.

With reference to the first aspect, in a possible implementation, the PPDU may be a PPDU of a single user. In this case, the first information (for example, an index value) may be in any one of the following fields of the PHY header: a universal signal (universal signal, U-SIG) field, a high efficiency signal A/high efficiency signal B (high efficient signal A/high efficient signal B, HE-SIG-A/HE-SIG-B) field, an extremely high throughput signal (extremely high throughput signal, EHT-SIG) field, or a future ultra high reliability signal (ultra high reliability signal, UHR-SIG) field.

With reference to the first aspect, in a possible implementation, the PPDU may be any PPDU in PPDUs of a plurality of users. In this case, the first information may need to be exchanged for each user, and one piece of first information may be used to index a probability of one or more constellation points of constellation shaping of a PPDU of one user. For example, the PPDU is an EHT PPDU. If a same constellation point probability distribution is used for constellation shaping of a plurality of users, first information (for example, a constellation shaping mode index) may be placed in a common field (Common field) of EHT-SIG. If different constellation point probability distributions are used for constellation shaping of a plurality of users, first information (for example, a constellation shaping mode index) of each user may be considered to be placed in a user specific field (User Specific field) of EHT-SIG of the user.

In this application, locations of the first information are respectively designed for single-user data transmission and multi-user data transmission, so that the locations are applicable to a single-user data transmission scenario and a multi-user data transmission scenario.

With reference to the first aspect, in a possible implementation, if different MCSs (different modulation schemes in the MCSs are mainly considered) are used on different spatial streams (spatial stream), different constellation point probability distributions for constellation shaping may also be used for the different spatial streams. Therefore, the first information may indicate a probability of one or more constellation points of constellation shaping of the PPDU on each spatial stream.

With reference to the first aspect, in a possible implementation, if different MCSs (different modulation schemes in the MCSs are mainly considered) are used on different resource units (resource unit, RU), different constellation point probability distributions for constellation shaping may also be used for the different RUs. Therefore, the first information may indicate a probability of one or more constellation points of constellation shaping of the PPDU on each RU.

In this application, different constellation shaping is used for different spatial streams or different resource units. In this way, implementation is flexible.

According to a second aspect, this application provides a communication method. The method is applied to a second communication apparatus. The method includes: receiving first information and processing the first information, where the first information may indicate a probability of one or more constellation points of constellation shaping (in one or more modulation schemes).

For example, the probability of the one or more constellation points of constellation shaping may be obtained through joint optimization of communication performance and sensing performance. For details, refer to descriptions of the following embodiments. Details are not described herein.

For example, the plurality of constellation points of constellation shaping may be constellation points in one modulation scheme, or may be constellation points in a plurality of modulation schemes. For example, a waveform corresponding to the constellation points of constellation shaping may be used for both data transmission and sensing measurement.

With reference to the second aspect, in a possible implementation, the probability of the one or more constellation points of constellation shaping is predefined or determined based on a predefined probability range.

For example, for one modulation scheme, probabilities of a plurality of constellation points of constellation shaping may be equal or unequal. If the probabilities of the constellation points of constellation shaping are equal, the first information may indicate a probability of one constellation point of constellation shaping, or may indicate probabilities of a plurality of constellation points of constellation shaping (the probabilities of the plurality of constellation points are equal). This is not limited in this application. If there are constellation points with unequal probabilities in the constellation points of constellation shaping, in other words, probabilities of at least two constellation points of constellation shaping are unequal, the first information may indicate the probabilities of the plurality of constellation points of constellation shaping.

With reference to the second aspect, in a possible implementation, that the second communication apparatus receives the first information may be: The second communication apparatus receives the first information via a first message. For example, the second communication apparatus receives the first message, where the first message includes the first information, and the first message may be used to request to enable a constellation shaping function.

For example, the first message may be a frame in a Wi-Fi communication system, or signaling in a cellular communication system. This is not limited in this application.

With reference to the second aspect, in a possible implementation, the first message further includes second information, and the second information may indicate one or more modulation schemes. Correspondingly, the first information specifically indicates a probability of one or more constellation points of constellation shaping in the one or more modulation schemes.

With reference to the second aspect, in a possible implementation, the first message further includes one or more of the following: third information, fourth information, or fifth information. The third information indicates to enable the constellation shaping function. The fourth information indicates duration of enabling the constellation shaping function. It may be understood that the constellation shaping function may be automatically disabled after the duration expires. The fifth information indicates a number of PPDUs using the constellation shaping function. It may be understood that, after the same number of PPDUs are sent, the constellation shaping function may be automatically disabled.

With reference to the second aspect, in a possible implementation, before the second communication apparatus receives the first information, the method further includes: The second communication apparatus receives a first message, where the first message is used to request to enable a constellation shaping function. In other words, a message carrying the first information is different from the first message.

With reference to the second aspect, in a possible implementation, after the second communication apparatus receives the first message, the method further includes: The second communication apparatus sends a second message, where the second message includes sixth information, and the sixth information indicates whether the second communication apparatus agrees to enable the constellation shaping function.

For example, the second message may be a frame in the Wi-Fi communication system, or signaling in the cellular communication system. This is not limited in this application. It may be understood that, if the first message is a frame in the Wi-Fi communication system, correspondingly, the second message is also a frame in the Wi-Fi communication system. If the first message is signaling in the cellular communication system, correspondingly, the second message is also signaling in the cellular communication system.

For example, the first message is a sensing measurement request frame, and the second message is a sensing measurement response frame.

With reference to the second aspect, in a possible implementation, after the second communication apparatus receives the first message, the method further includes: The second communication apparatus receives or sends a third message, where the third message is used to disable the constellation shaping function.

For example, the third message may be a frame in the Wi-Fi communication system, or signaling in the cellular communication system. This is not limited in this application. It may be understood that, if the first message is a frame in the Wi-Fi communication system, correspondingly, the third message is also a frame in the Wi-Fi communication system. If the first message is signaling in the cellular communication system, correspondingly, the third message is also signaling in the cellular communication system.

For example, the first message is a sensing measurement request frame, the second message is a sensing measurement response frame, and the third message is a sensing measurement session termination frame.

With reference to the second aspect, in a possible implementation, after the second communication apparatus receives the first information, the method further includes: The second communication apparatus receives or sends a fourth message. When a modulation scheme used for the fourth message is a first modulation scheme, it indicates that constellation shaping is performed on the fourth message. The first modulation scheme may be QAM of various modulation orders.

For example, the fourth message may be a PPDU, and the modulation scheme used for the PPDU is the first modulation scheme. In this case, a physical layer payload of the PPDU may include a modulation symbol obtained by performing constellation shaping on a bitstream based on a probability of one or more constellation points in the first modulation scheme indicated by the first information. It may be understood that a physical layer header (PHY header) of the PPDU includes an MCS, and the MCS may indicate a modulation scheme and a rate that are used for the PPDU.

With reference to the second aspect, in a possible implementation, after the second communication apparatus receives the first information, the method further includes: The second communication apparatus receives or sends a fourth message, where the fourth message includes indication information, and the indication information may indicate whether constellation shaping is performed on the fourth message.

For example, the fourth message may be a PPDU, the indication information indicates that constellation shaping is performed on the PPDU, and a modulation scheme used for the PPDU is a first modulation scheme. In this case, a physical layer payload of the PPDU may include a modulation symbol obtained by performing constellation shaping on a bitstream based on a probability of one or more constellation points in the first modulation scheme indicated by the first information. It may be understood that a physical layer header (PHY Header) of the PPDU includes an MCS, and the MCS may indicate a modulation scheme and a rate that are used for the PPDU.

With reference to the second aspect, in a possible implementation, after the second communication apparatus receives the first information, the method further includes: The second communication apparatus receives or sends a fourth message on a specific resource. When a modulation scheme used for the fourth message is a first modulation scheme, it indicates that constellation shaping is performed on the fourth message. The first modulation scheme may be QAM of various modulation orders. The specific resource may be indicated via a time-frequency location and/or an antenna port.

For example, the fourth message may be a reference signal, a control channel, or a data channel. The modulation scheme for the fourth message is the first modulation scheme. In this case, the fourth message may include a modulation symbol obtained by performing constellation shaping on a bitstream based on a probability of one or more constellation points in the first modulation scheme indicated by the first information.

With reference to the second aspect, in a possible implementation, the first information may be in the physical layer header of the PPDU. In this case, the first information may indicate a probability of one or more constellation points of constellation shaping of the PPDU.

For example, the physical layer header of the PPDU further includes seventh information, and the seventh information is a first value, and indicates that constellation shaping is performed on the PPDU.

With reference to the second aspect, in a possible implementation, the probability of the constellation point of constellation shaping may be represented by an index. For example, one index corresponds to probabilities of a group of constellation points of constellation shaping. The first information includes a constellation shaping mode index, and one constellation shaping mode index corresponds to probabilities of a group of constellation points of constellation shaping.

For another example, one index may alternatively correspond to probabilities of one or more groups of constellation points of constellation shaping. The first information includes a constellation shaping mode index, and the constellation shaping mode index and the modulation scheme used for the PPDU may be used to determine the probability of the one or more constellation points of constellation shaping of the PPDU. One constellation shaping mode index corresponds to probabilities of one or more groups of constellation points of constellation shaping.

With reference to the second aspect, in a possible implementation, the PPDU may be a PPDU of a single user. In this case, the first information (for example, an index value) may be in any one of the following fields of the PHY header: a U-SIG field, an HE-SIG-A/HE-SIG-B field, an EHT-SIG field, or a future UHR-SIG field.

With reference to the second aspect, in a possible implementation, the PPDU may be any PPDU in PPDUs of a plurality of users. In this case, the first information may need to be exchanged for each user, and one piece of first information may be used to index a probability of one or more constellation points of constellation shaping of a PPDU of one user. For example, the PPDU is an EHT PPDU. If a same constellation point probability distribution is used for constellation shaping of a plurality of users, first information (for example, a constellation shaping mode index) may be placed in a common field (Common field) of EHT-SIG. If different constellation point probability distributions are used for constellation shaping of a plurality of users, first information (for example, a constellation shaping mode index) of each user may be considered to be placed in a user specific field (User Specific field) of EHT-SIG of the user.

With reference to the second aspect, in a possible implementation, if different MCSs (different modulation schemes in the MCSs are mainly considered) are used on different spatial streams (spatial stream), different constellation point probability distributions for constellation shaping may also be used for the different spatial streams. Therefore, the first information may indicate a probability of one or more constellation points of constellation shaping of the PPDU on each spatial stream.

With reference to the second aspect, in a possible implementation, if different MCSs (different modulation schemes in the MCSs are mainly considered) are used on different resource units (resource unit, RU), different constellation point probability distributions for constellation shaping may also be used for the different RUs. Therefore, the first information may indicate a probability of one or more constellation points of constellation shaping of the PPDU on each RU.

According to a third aspect, this application provides a communication apparatus. The communication apparatus is configured to perform the method according to any one of the first aspect or the possible implementations of the first aspect. The communication apparatus includes a unit for performing the method in any one of the first aspect or the possible implementations of the first aspect.

According to a fourth aspect, this application provides a communication apparatus. The communication apparatus is configured to perform the method in any one of the second aspect or the possible implementations of the second aspect. The communication apparatus includes a unit for performing the method in any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments provided below. For beneficial effect of the third aspect and the fourth aspect, refer to the related descriptions of the first aspect and the second aspect. Details are not described herein again.

According to a fifth aspect, this application provides a communication apparatus. The communication apparatus includes a processor, configured to perform the method in any one of the first aspect, the second aspect, or the possible implementations of the first aspect or the second aspect. Alternatively, the processor is configured to execute a program stored in a memory. When the program is executed, the method in any one of the first aspect, the second aspect, or the possible implementations of the first aspect or the second aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to send or receive first information.

According to a sixth aspect, this application provides a communication apparatus. The communication apparatus may include a processor and an interface circuit, and the processor is connected to the interface circuit. The interface circuit is configured to exchange (or receive/ send or input/output) information or data. The processor is configured to run program instructions, so that the communication apparatus performs the method in any one of the first aspect, or the second aspect, or the possible implementations of the first aspect or the second aspect. The interface circuit may be a communication interface or a transceiver. The transceiver may be a radio frequency module in the communication apparatus, a combination of a radio frequency module and an antenna, or an input/output interface of a chip or a circuit.

According to a seventh aspect, this application provides a readable storage medium, where the readable storage medium stores program instructions. When the program instructions are run on a computer, the computer is enabled to perform the method in any one of the first aspect, or the second aspect, or the possible implementations of the first aspect or the second aspect.

According to an eighth aspect, this application provides a program product including program instructions. When the program product runs, the method in any one of the first aspect, the second aspect, or the possible implementations of the first aspect or the second aspect is performed.

According to a ninth aspect, this application provides an apparatus. The apparatus may be implemented in a form of a chip, or may be implemented in a form of a device. The apparatus includes a processor. The processor is configured to read and execute a program stored in a memory, to perform the communication method in one or more of the first aspect, or the second aspect, or the possible implementations of the first aspect or the second aspect. Optionally, the apparatus further includes the memory, and the memory is connected to the processor through a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory and the processor may be integrated together.

According to a tenth aspect, this application provides a wireless communication system. The wireless communication system includes a first communication apparatus and/or a second communication apparatus. The first communication apparatus is configured to perform the method in any one of the first aspect or the possible implementations of the first aspect, and the second communication apparatus is configured to perform the method in any one of the second aspect or the possible implementations of the second aspect.

For technical effect achieved in the foregoing aspects, refer to each other or refer to technical effect in method embodiments provided below. Details are not described herein.

### BRIEF DESCRIPTION OF DRAWINGS

FIG. 1 is a simplified diagram of a communication system according to an embodiment of this application;
FIG. 2 is a simplified diagram of a wireless local area network system according to an embodiment of this application;
FIG. 3 is a diagram of a possible architecture of an integrated sensing and communication system according to an embodiment of this application;
FIG. 4a is a simplified schematic flowchart of signal processing at a transmitter according to an embodiment of this application;
FIG. 4b is a simplified schematic flowchart of signal processing at a receiver according to an embodiment of this application;
FIG. 5 is a schematic flowchart of a possible constellation shaping method according to an embodiment of this application;
FIG. 6A and FIG. 6B are diagrams of values within a constellation point probability range according to an embodiment of this application;
FIG. 7 shows constellation diagrams of 16QAM and 64QAM in a case in which communication performance is optimal according to an embodiment of this application;
FIG. 8 is a possible diagram of 16QAM constellation shaping according to an embodiment of this application;
FIG. 9 is a diagram of CCDM encoding according to an embodiment of this application;
FIG. 10A to FIG. 10D show expected constellation diagrams and constellation diagrams obtained after constellation shaping according to an embodiment of this application;
FIG. 11 is a schematic flowchart of another possible constellation shaping method according to an embodiment of this application;
FIG. 12 is another possible diagram of 16QAM constellation shaping according to an embodiment of this application;
FIG. 13A and FIG. 13B show an expected 16QAM constellation diagram and a 16QAM constellation diagram obtained after constellation shaping according to an embodiment of this application;
FIG. 14A to FIG. 14C are a simplified schematic flowchart of a constellation shaping method according to an embodiment of this application;
FIG. 15 is a schematic flowchart of a communication method according to an embodiment of this application;
FIG. 16 is a diagram of a frame format of a constellation shaping request frame according to an embodiment of this application;
FIG. 17 is a diagram of a frame format of a constellation shaping response frame according to an embodiment of this application;
FIG. 18 is another schematic flowchart of a communication method according to an embodiment of this application;
FIG. 19 is a diagram of a structure of a communication apparatus according to an embodiment of this application;
FIG. 20 is a diagram of another structure of a communication apparatus according to an embodiment of this application; and
FIG. 21 is a diagram of still another structure of a communication apparatus according to an embodiment of this application.

### DESCRIPTION OF EMBODIMENTS

The following clearly and describes technical solutions in embodiments of this application with reference to accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. In this specification, "and/or" describes only an association relationship between associated objects and represents that there may be three relationships. For example, A and/or B may represent the following three cases: Only A exists, both A and B exist, and only B exists. In addition, "at least one" means one or more, and "a plurality of" means two or more. "One or more of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Terms "include", "have", and any variants thereof are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the system, the product, or the device.

In this application, the word "example" or "for example" is used to represent giving an example, an illustration, or a description. Any embodiment or design scheme described as an "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" all mean that an apparatus performs corresponding processing in an objective situation, and are not intended to limit time. The terms do not mean that the apparatus is required to perform a determining action during implementation, and do not mean any other limitation. That the apparatus performs corresponding processing in the objective situation includes: Corresponding processing can be performed when the objective situation is met; or corresponding processing can be performed only when the objective situation and another situation are met.

In this application, "simultaneously" may be understood as "concurrently" or being at a same time point, or may be understood as being in a period of time, or may be understood as being in a same periodicity. This may be specifically understood with reference to context.

In this application, unless otherwise specified, an element indicated in a singular form is intended to indicate "one or more", but does not indicate "one and only one".

It may be understood that in embodiments of this application, "B corresponding to A," "A corresponds to B," or a similar expression indicates that B is associated with A and B may be determined based on A. Determining B based on A does not mean that B is determined based only on A, and B may alternatively be determined based on A and/or other information.

The technical solutions in embodiments of this application may be applied to various wireless communication systems. The wireless communication system may support both a communication function and a sensing function; and may be, for example, a wireless local area network (wireless local area network, WLAN) system using 802.11 series protocols, a long term evolution (long term evolution, LTE) system, a 5th generation (5th Generation, 5G) system such as a new radio access technology (new radio access technology, NR) system, a network integrating a plurality of systems, an internet of things system, an internet of vehicles system, an open radio access network (open-radio access network, O-RAN) system, and a future communication system such as a 6th generation (6th Generation, 6G) system. The 802.11 series protocols include but are not limited to an 802.11ax protocol, an 802.11be protocol, Wi-Fi 7, or a next-generation protocol like Wi-Fi 8, ultra-high reliability (ultra high reliability, UHR), an 802.11bn protocol, Wi-Fi AI, or a millimeter wave. Examples are not enumerated herein. Herein, supporting the sensing function may be understood as supporting but not limited to one or more of the following sensing protocols: an 802.11bf protocol, a next-generation sensing protocol of the 802.11bf protocol, a future-generation WLAN sensing protocol, or the like.

In a possible implementation, the communication system includes communication devices, and the communication devices may perform wireless communication via an air interface resource. The communication device may include a network device and a terminal device. The network device may also be referred to as a base station device, an access network device, or an access point (access point, AP) device. The air interface resource may include at least one of a time domain resource, a frequency domain resource, a code resource, and a space resource. In this application, "at least one" may also be described as "one or more", and "a plurality of" may be two, three, four, or more. This is not limited in this application.

It should be understood that a system architecture and an application scenario that are described in embodiments of this application are intended to describe the technical solutions in embodiments of this application more clearly, and do not constitute a limitation on the technical solutions provided in embodiments of this application. A person of ordinary skill in the art may know that with evolution of the system architecture and new application scenarios, the technical solutions provided in embodiments of this application are also applicable to similar technical problems.

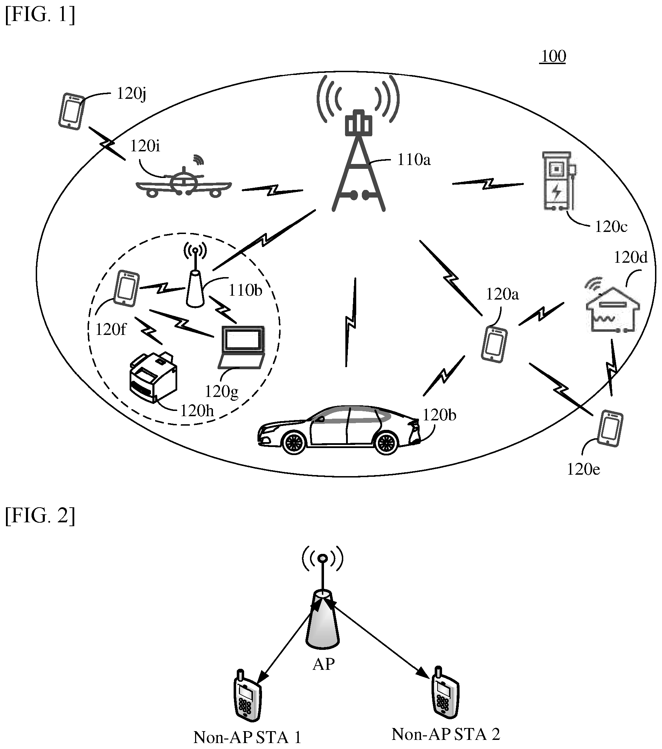

FIG. 1 is a simplified diagram of a communication system according to an embodiment of this application. As shown in FIG. 1, the communication system includes a radio access network 100. The radio access network 100 may be a next-generation (for example, 6G or a later version) radio access network, or a conventional (for example, 5G, 4G, 3G, or 2G) radio access network. One or more terminal devices (120a to 120j, which are collectively referred to as 120) may be connected to each other, or connected to one or more network devices (110a and 110b, which are collectively referred to as 110) in the radio access network 100. It may be understood that FIG. 1 is merely a diagram. The communication system may further include other devices, for example, a core network device, a wireless relay device, and/or a wireless backhaul device, which are not shown in FIG. 1.

In actual application, the communication system may include all of a plurality of network devices (also referred to as access network devices or AP devices), and may include all of a plurality of terminal devices. One network device may simultaneously serve one or more terminal devices. One terminal device may also simultaneously access one or more network devices. A number of terminal devices and a number of network devices included in the communication system are not limited in embodiments of this application.

The network device may be an entity configured to transmit or receive a signal on a network side, for example, a base station (base station, BS). The BS may be a device that is deployed in a radio access network and that can perform wireless communication with a terminal. The base station may have a plurality of forms, for example, a macro base station, a micro base station, a relay station, and an access point (access point, AP). For example, the base station in embodiments of this application may be a base station in 5G, a base station in a 6th generation (6th generation, 6G) mobile communication system, an access network device or a module of the access network device in an open radio access network (open radio access network, O-RAN) system, a base station in a future mobile communication system, an access node in a Wi-Fi system, an evolved NodeB (evolved NodeB, eNB) in LTE, or the like. The base station in 5G may also be referred to as a transmission reception point (transmission reception point, TRP) or a 5G base station (next-generation NodeB, gNB). The base station may also be replaced with the following names: a radio access point, a node B (nodeB), a transmitting point (transmitting point, TP), a master station MeNB, a secondary station SeNB, a multi-standard radio (Multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, an IAB donor (IAB donor), and the like.

The network device in embodiments of this application may be an integrated base station, or may be a base station including the central unit (central unit, CU) and/or the distributed unit (distributed unit, DU). The base station including the CU and the DU may also be referred to as a base station in which a CU and a DU are separated from each other. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU. Alternatively, the network device in embodiments of this application may be a radio unit (radio unit, RU). Alternatively, the network device in embodiments of this application may be of an open radio access network (O-RAN) architecture or the like. A specific deployment manner of the network device is not limited in embodiments of this application. For example, when the network device is of the O-RAN architecture, the network device shown in embodiments of this application may be an access network device in an O-RAN, for example, one or a combination of a CU, a DU, or an RU, or may be a module in the access network device. In an O-RAN system, a CU may also be referred to as an open (open, O)-CU, a CU-CP may also be referred to as an O-CU-CP, a CU-UP may also be referred to as an O-CU-UP, a DU may also be referred to as an O-DU, and an RU may also be referred to as an O-RU.

In embodiments of this application, an apparatus configured to implement a function of a network device may be a network device, or may be an apparatus that can support the network device in implementing the function, for example, a chip system, a communication module, or a modem. The apparatus may be installed in the network device. The network device may support networks with a same access technology or different access technologies. A specific technology and a specific device form that are used by the network device are not limited in embodiments of this application.

The terminal device may be referred to as a terminal, user equipment (user equipment, UE), a mobile station (mobile station, MS), a mobile terminal (mobile terminal, MT), a non-access point station (non-access point station, non-AP STA), or the like; may be a device having a wireless transceiver function; may be deployed on land, including an indoor device, an outdoor device, a handheld device, or a vehicle-mounted device; may be deployed on water (for example, on a ship); or may be deployed in the air (for example, on an aircraft, a balloon, or a satellite). The terminal device may be configured to connect to a person, an object, and a machine. The terminal device 120 may be widely used in various scenarios, for example, cellular communication, WLAN communication, device-to-device (device-to-device, D2D), vehicle-to-everything (vehicle-to-everything, V2X), peer-to-peer (peer-to-peer, P2P), machine-to-machine (machine-to-machine, M2M), machine type communication (machine type communication, MTC), an internet of things (Internet of Things, IoT), virtual reality (virtual reality, VR), augmented reality (augmented reality, AR), industrial control, autonomous driving, telemedicine, a smart grid, smart furniture, smart office, a smart wearable device, smart transportation, a smart city (smart city), a smart home (smart home), an uncrewed aerial vehicle, a robot, remote sensing, passive sensing, positioning, navigation and tracking, and self-delivery and mobility.

In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. A specific technology and a specific device form that are used by the terminal device are not limited in embodiments of this application.

It may be understood that, when the network device is an access point (for example, 110b in FIG. 1) and the terminal device is a non-access point station (for example, 120f or 120g in FIG. 1), a network including the network device and the terminal device may be a wireless local area network (WLAN). In other words, the communication system shown in FIG. 1 may include but is not limited to the WLAN.

For example, FIG. 2 is a simplified diagram of a wireless local area network system according to an embodiment of this application. As shown in FIG. 2, the WLAN system includes one or more APs and one or more non-AP STAs (for example, a non-AP STA 1 and a non-AP STA 2 in FIG. 2). The AP may perform communication and sensing with one or more non-AP STAs, and a plurality of non-AP STAs may also perform communication and sensing with each other.

It may be understood that, in FIG. 2, for example, the non-AP STA is a mobile phone and the AP is a router. This does not mean a limitation on types of the AP and the non-AP STA in embodiments of this application. In addition, FIG. 2 shows only one AP and two non-AP STAs as an example. However, there may be more or fewer APs and non-AP or STAs in the WLAN system. This is not limited in embodiments of this application.

In a possible implementation, the non-AP STA and the AP may support both a WLAN communication protocol and a WLAN sensing protocol. The WLAN communication protocol includes but is not limited to an 802.11ax protocol, an 802.11be protocol, Wi-Fi 7, or a next-generation protocol like Wi-Fi 8, ultra-high reliability (ultra high reliability, UHR), an 802.11bn protocol, Wi-Fi AI, or a millimeter wave. The WLAN sensing protocol includes but is not limited to an 802.11bf protocol, a next-generation sensing protocol of the 802.11bf protocol, a next-generation WLAN sensing protocol.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, hospital wards, classrooms, supermarkets, squares, streets, production workshops and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicles device in the internet of vehicles, infrastructure (for example, a vending machine, a self-service navigation station of a supermarket, a self-service cash register device, or a self-service ordering machine) in daily life scenarios, a device in a large sports and music venue, or the like. Specific forms of the station and the access point are not limited in embodiments of this application, and are merely examples for description herein.

It may be understood that although this application is mainly described by using an example in which an institute of electrical and electronics engineers (institute of electrical and electronics engineers, IEEE) 802.11 network is deployed, a person skilled in the art easily understands that various aspects of this application may be extended to another network that uses various standards or protocols, for example, Bluetooth (BLUETOOTH), high-performance wireless LAN (high performance radio LAN, HIPERLAN) (a wireless standard that is similar to the IEEE 802.11 standard and is mainly used in Europe), a wide area network (wide area network, WAN), a wireless local area network (WLAN), a personal area network (personal area network, PAN), or another known or later developed network. Therefore, regardless of used coverage and a used wireless access protocol, various aspects provided in this application are applicable to any appropriate wireless network.

In some embodiments, in the WLAN system shown in FIG. 2, the AP may be replaced with an access point multi-link device (AP multi-link device, AP MLD), and the non-AP STA may be replaced with a non-access point multi-link device (non-AP multi-link device, non-AP MLD). That is, the technical solutions provided in embodiments of this application may also be applied to a scenario in which a multi-link device (multi-link device, MLD) communicates with a multi-link device. The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STAs). The affiliated STA is a logic station and may operate on one link. The affiliated station may be an access point (access point, AP) or a non-access point station (non-access point station, non-AP STA). A multi-link device whose affiliated station is an AP may be referred to as an AP MLD, and a multi-link device whose affiliated station is a non-AP STA may be referred to as a non-AP MLD.

In a possible implementation, the multi-link device (which may be a non-AP MLD or an AP MLD herein) in embodiments of this application is an apparatus having a wireless communication function. The apparatus may be an integrated device, or may be a chip, a processing system, or the like installed in the integrated device. A device in which the chip or processing system is installed may implement methods and functions in embodiments of this application under control of the chip or processing system.

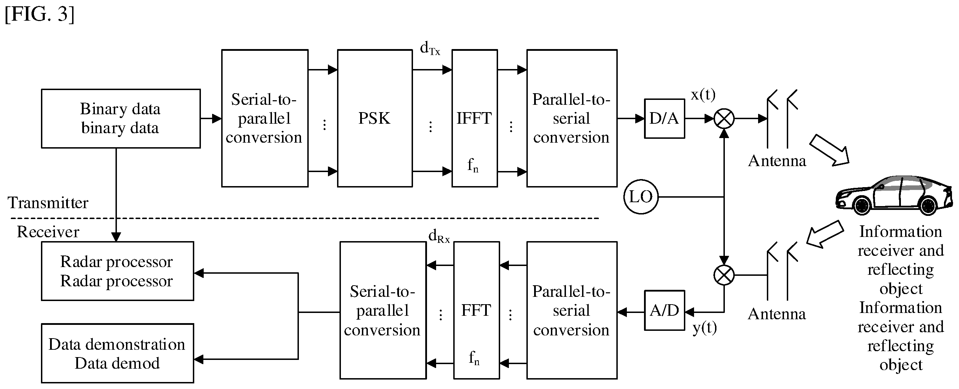

It may be understood that an electromagnetic wave signal has both a communication function and a sensing function, which makes integrated sensing and communication (ISAC) possible. Currently, it is proposed that sensing may be performed via a communication signal. In a possible implementation, an architecture of a system for performing sensing via a communication signal is shown in FIG. 3. FIG. 3 is a diagram of a possible architecture of an integrated sensing and communication system. As shown in FIG. 3, in the system, a transmitter machine may be shared for communication and sensing in terms of hardware and a signal processing module. A transmit signal may be used as a communication signal to transmit information, and may also be used as a detection signal to sense a target. To be specific, an orthogonal frequency division multiplexing (orthogonal frequency division multiplexing, OFDM) communication waveform is used as a sensing signal, and a sensing algorithm is designed at a sensing receiver (sensing receiver) to estimate information such as a range and a velocity of the target.

Specifically, at a transmitter shown in FIG. 3, binary bit data is divided into a plurality of parallel streams through serial-to-parallel conversion, and is mapped to a phase shift keying (phase shift keying, PSK) symbol, to generate a modulation symbol sequence d_{Tx}. After inverse fast Fourier transform (inverse fast Fourier transform, IFFT) and parallel-to-serial conversion are performed on the modulation symbol sequence d_{Tx}, digital-to-analog (digital to analog, D/A) conversion is performed on this signal to obtain an analog signal x(t), the analog signal x(t) is mixed with a local oscillator signal generated by a local oscillator (local oscillator, LO), and then a generated signal is transmitted at a carrier frequency. At a receiver shown in FIG. 3, a received modulation symbol d_{Rx} is restored from a received baseband signal y(t) through a fast Fourier transform (fast Fourier transform, FFT) operation.

Sensing processing on the velocity and the range of the target includes but is not limited to the following three steps: First, transmit information is removed from a received information symbol through channel estimation ( ${D}_{div} = \frac{{d}_{R x}}{{d}_{Tx}}$). As an optional step, a window function may be applied to D_{div} along two dimensions (a row and a column) of a matrix, to reduce a side lobe level introduced by Fourier transform in a subsequent step. Then, discrete Fourier transform of each row in D_{div} is calculated. Finally, based on each column of a matrix generated through discrete Fourier transform in the previous step, inverse discrete Fourier transform of the column is calculated, and an obtained matrix may represent a two-dimensional radar image in range and Doppler.

It may be understood that PSK modulation is used for the transmit signal shown in FIG. 3. Because PSK modulation is constant-envelope (or constant-modulus), a side lobe of an ambiguity function (or an autocorrelation function) of a PSK modulation waveform is small, and sensing performance of the PSK modulation waveform is good. However, to improve a transmission rate and communication performance, an existing communication system usually uses quadrature amplitude modulation (quadrature amplitude modulation, QAM). A QAM waveform is non-constant-envelope (or non-constant-modulus), a side lobe of an ambiguity function (or an autocorrelation function) of the QAM waveform is high, and the ambiguity function (or the autocorrelation function) reflects a resolution capability of a sensing system for the target. Therefore, a high side lobe of the ambiguity function (or the autocorrelation function) affects target detection performance, resulting in poor sensing performance.

In view of this, embodiments of this application provide a communication method and apparatus, and a readable storage medium, to resolve a problem that a side lobe of an ambiguity function (or an autocorrelation function) of an existing non-constant-modulus modulation (for example, QAM) communication signal is high and sensing performance is poor. The side lobe of the ambiguity function (or the autocorrelation function) of the non-constant-modulus modulation (for example, QAM) communication signal is reduced. In this way, both communication and sensing can be supported (or integrated sensing and communication are supported), but also the sensing performance can be improved while communication performance is considered.

The following describes in detail the technical solutions provided in this application with reference to more accompanying drawings.

To clearly describe the technical solutions in this application, this application is described by using a plurality of embodiments. For details, refer to descriptions of the following embodiments. In this application, unless otherwise specified, same or similar parts of embodiments or implementations may be mutually referenced. In embodiments of this application and the implementations/methods/implementation methods in embodiments, unless otherwise specified or unless a logic conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logic relationship thereof. The following implementations of this application are not intended to limit the protection scope of this application. It may be understood that a sequence of the following embodiments does not represent a degree of importance.

It should be understood that, in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information D is determined based on information C includes both that the information D is determined based on only the information C and that the information D is determined based on the information C and other information. In addition, that the information C is used to determine the information D may further include indirect determining, for example, the information D is determined based on information E, and the information E is determined based on the information C.

In addition, in embodiments of this application, that "a network element A sends information A to a network element B" may be understood as that a destination end of the information A or an intermediate network element in a transmission path to the destination end is the network element B, and may include directly or indirectly sending information to the network element B. "The network element B receives the information A from the network element A" may be understood as that a source end of the information A or an intermediate network element in a transmission path from the source end is the network element A, and may include directly or indirectly receiving the information from the network element A. The information may undergo necessary processing, for example, a format change, between the source end and the destination end for information sending. However, the destination end may understand valid information from the source end. Similar descriptions in this application may be understood similarly. Details are not described herein.

In a possible implementation, in this application, a first communication apparatus may be an AP or a base station, and a second communication apparatus may be a non-AP STA or UE; or a first communication apparatus is a non-AP STA or UE, and a second communication apparatus is an AP or a base station. Certainly, in this application, both the first communication apparatus and the second communication apparatus may be non-AP STAs or UEs, or both the first communication apparatus and the second communication apparatus are APs or base stations. Specific forms of the first communication apparatus and the second communication apparatus are not limited in this application.

In a possible implementation, the technical solutions provided in this application may be applied to a scenario in which both data communication and sensing are performed (for example, integrated sensing and communication), and are mainly applied to a communication system using an OFDM technology, for example, a Wi-Fi communication and sensing scenario, or a cellular communication and sensing scenario.

To better understand the technical solutions provided in this application, the following first describes possible locations of constellation shaping at a transmitter and a receiver, then describes one or more possible implementations of constellation shaping, and finally describes some or all signaling exchange for supporting the transmitter and the receiver in implementing a constellation shaping function. It may be understood that the following description sequence is merely for ease of understanding, and does not represent a degree of importance.

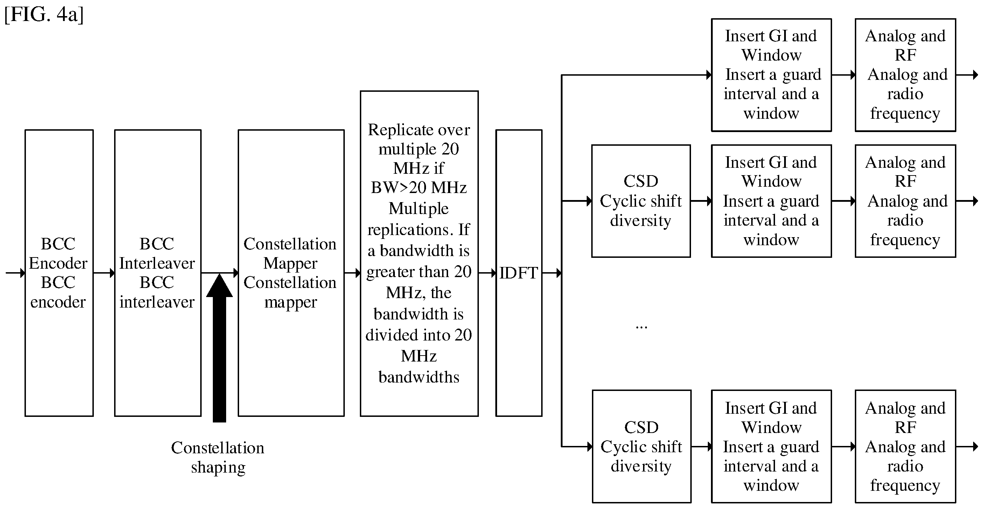

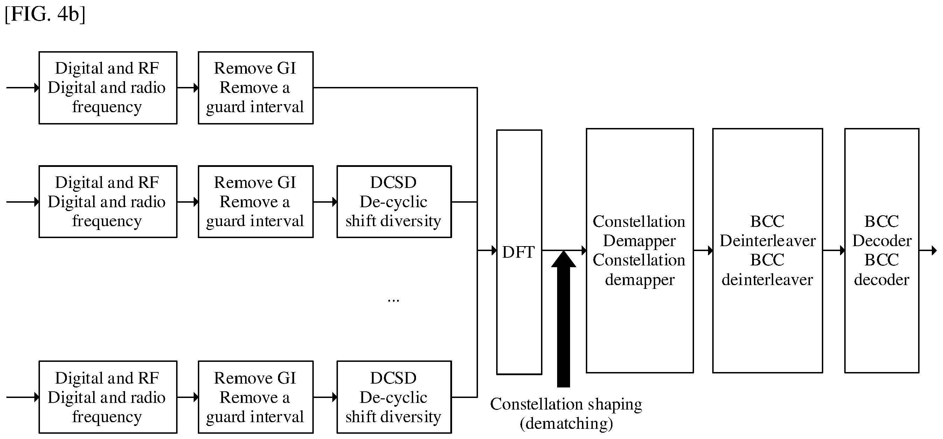

In a possible implementation, in this application, a constellation shaping phase may be added to a transmitter of an existing OFDM communication system, and a constellation shaping dematching phase is added to a receiver. FIG. 4a is a simplified schematic flowchart of signal processing at a transmitter according to an embodiment of this application. FIG. 4b is a simplified schematic flowchart of signal processing at a receiver according to an embodiment of this application. In FIG. 4a and FIG. 4b, binary convolutional code (binary convolutional code, BCC) is used as an example. Certainly, this application is also applicable to another coding scheme, for example, low-density parity-check code (low-density parity-check code, LDPC) or polar (Polar) code. For example, FIG. 4a shows a transmitter processing process of a 160 MHz very high throughput (very high throughput, VHT) single-user (single user, SU) PPDU data field, and FIG. 4b shows a corresponding receiver processing process.

In this application, optimal or suboptimal constellation point probability distribution (or specific distribution) may be obtained through joint optimization of communication and sensing based on a requirement for communication and sensing. For example, a fourth-order moment of a QAM signal amplitude and a communication achievable rate are jointly optimized, so that a value of the optimized fourth-order moment of the constellation diagram amplitude after probability weighting tends to 1, to obtain a trade-off (Trade-off) between communication performance and sensing performance and a corresponding constellation probability distribution under the trade-off. Alternatively, constellation points that meet this condition (for example, a QAM signal amplitude falls within a specific range) are reserved through joint optimization of a range of the QAM signal amplitude (which affects sensing performance) and a number of constellation points (which affects communication performance), the reserved constellation points comply with an equal probability distribution, and probabilities of constellation points that do not meet the condition are all zero (or are discarded), to obtain a trade-off (Trade-off)/compromise between the communication performance and the sensing performance and a corresponding constellation point probability distribution under the trade-off, that is, a probability value of each constellation point.

As shown in FIG. 4a, constellation shaping is performed based on the constellation point probability distribution obtained through optimization, and binary bit data output by a BCC interleaver is mapped to a QAM symbol, to generate a modulation symbol sequence that complies with a specific distribution (namely, the constellation point probability distribution obtained through optimization). After inverse discrete Fourier transform (inverse discrete Fourier transform, IDFT) and parallel-to-serial conversion, this signal is converted into an analog signal, the analog signal is mixed with a local oscillator signal (and then cyclic shift diversity (cyclic shift diversity, CSD) is performed), a guard interval (guard interval, GI) and a window are inserted, and then a generated signal is transmitted via an analog and radio frequency module. Correspondingly, the processing process of the receiver is an inverse process of the transmitter. As shown in FIG. 4b, the receiver first receives a baseband signal via a digital and radio frequency module, removes a guard interval (GI) from the baseband signal, performs serial-to-parallel conversion, and then restores a received modulation symbol sequence from the received baseband signal through a discrete Fourier transform (discrete Fourier transform, DFT) operation (after de-cyclic shift diversity (de-cyclic shift diversity, DCSD) is performed). It may be understood that, in this application similar to the conventional technology, the modulation symbol sequence transmitted in FIG. 4a and the modulation symbol sequence received in FIG. 4b jointly complete a sensing task, that is, the sensing task operates on a transmitted modulation symbol and a received modulation symbol. In other words, the sensing task can be completed without subsequent processing (for example, constellation demapping, BCC deinterleaving, or BCC decoding) on the modulation symbol. However, for a communication task, as shown in FIG. 4b, constellation shaping dematching further needs to be performed based on the constellation point probability distribution obtained through optimization, the modulation symbol sequence restored through the DFT operation is demapped into the binary bit data, and then, original information is obtained via a BCC deinterleaver and a BCC decoder.

It may be understood that, in FIG. 4a and FIG. 4b, signal processing at the transmitter and the receiver in Wi-Fi communication is used as an example. In actual application, constellation shaping provided in embodiments of this application is also applicable to a transmitter and a receiver in cellular communication. Details are not described herein.

The following describes one or more possible implementations of constellation shaping.

This application is oriented to an ISAC system, and designs an ISAC waveform based on constellation shaping, for a problem of poor sensing performance of an existing non-constant-modulus modulation (for example, 16QAM, 64QAM, or 256QAM) signal. For example, a constellation point probability distribution (or a specific distribution) with optimal or suboptimal communication performance and sensing performance is obtained through joint optimization of communication performance and sensing performance of a specific non-constant-envelope (or non-constant-modulus) modulation signal (for example, 16QAM, 64QAM, or 256QAM) based on requirements for communication performance and sensing performance. Then, the obtained constellation point probability is transferred, and constellation shaping is performed on an existing communication waveform. For example, existing QAM constellation points with an equal probability are encoded into QAM constellation points with unequal probabilities, to obtain an ISAC waveform that meets the requirements for both communication performance and sensing performance.

In a possible implementation, because a side lobe of an ambiguity function of a modulation signal is affected by a modulation symbol amplitude (related to a fourth-order moment of the modulation symbol amplitude), for a PSK modulation signal, an expectation of a fourth-order moment of a modulation symbol is equal to 1. Therefore, an idea of joint optimization of communication and sensing in this application may be as follows: The fourth-order moment of the QAM signal amplitude and a communication achievable rate are jointly optimized, so that a value of the optimized fourth-order moment of the constellation diagram amplitude after probability weighting tends to 1, to obtain a trade-off (Trade-off)/compromise between communication performance and sensing performance and a corresponding constellation point probability distribution P_{A} under the trade-off (Trade-off)/compromise.

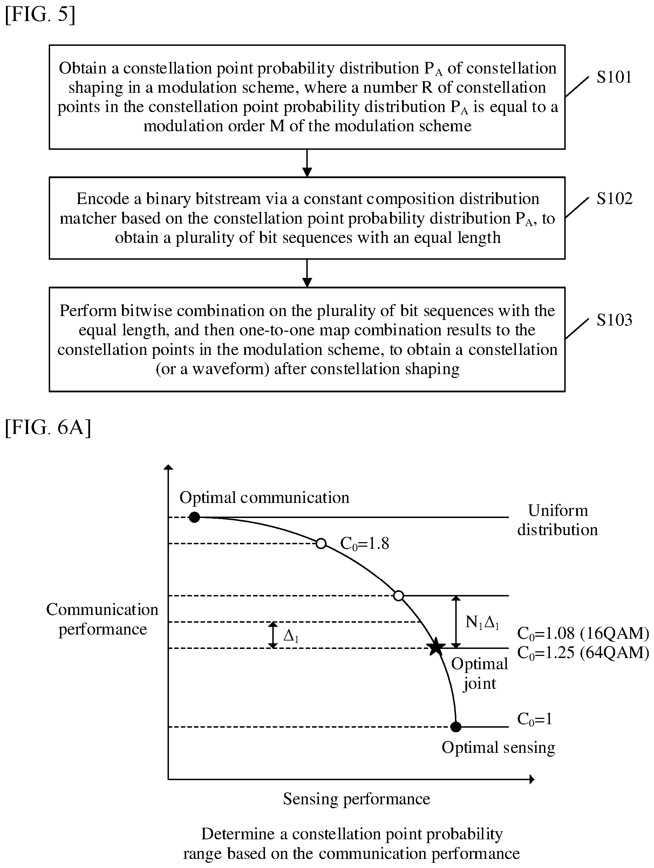

FIG. 5 is a schematic flowchart of a possible constellation shaping method according to an embodiment of this application. The method mainly describes how to encode QAM constellation points with an equal probability into QAM constellation points with unequal probabilities, to obtain an ISAC waveform in which both communication performance and sensing performance are considered. As shown in FIG. 5, the constellation shaping method includes but is not limited to the following steps.

S101: Obtain a constellation point probability distribution P_{A} of constellation shaping in a modulation scheme, where a number R of constellation points in the constellation point probability distribution P_{A} is equal to a modulation order M of the modulation scheme.

The modulation scheme in embodiments of this application may include quadrature amplitude modulation (QAM), and QAM includes two types: a uniform constellation and a non-uniform constellation (non-uniform Constellation, NUC). In embodiments of this application, QAM of different modulation orders may be understood as different modulation schemes. For example, 16QAM and 64QAM may be understood as two different modulation schemes. For clarity, in embodiments of this application, the following uses an example in which QAM is a uniform constellation for description. However, this embodiment of this application is also applicable to a case in which QAM is a non-uniform constellation.

In a possible implementation, for a non-constant-envelope (or non-constant-modulus) QAM signal (for example, 16QAM and 64QAM) in this embodiment of this application, a fourth-order moment of a QAM signal amplitude and a communication achievable rate are jointly optimized based on requirements for communication performance and sensing performance, so that a value of the optimized fourth-order moment of the constellation diagram amplitude after probability weighting tends to 1, and a number of constellation points after optimization remains unchanged, to obtain a trade-off (Trade-off)/compromise between communication performance and sensing performance and a corresponding constellation point probability distribution P_{A} under the trade-off (Trade-off)/compromise, that is, a probability value of each constellation point. It may be understood that, for QAM of different modulation orders, fourth-order moments of QAM signal amplitudes and communication achievable rates are jointly optimized, to obtain different constellation point probability distributions P_{A}. For QAM of a same modulation order, in this embodiment of this application, a number of constellation points before optimization is the same as a number of constellation points after optimization.

In a possible implementation, in this embodiment of this application, QAM of different modulation orders and constellation point probability distributions P_{A} that correspond to QAM, that is, a probability value of each constellation point, may be predefined in a standard protocol.

For example, 16QAM and 64QAM are used as an example, as shown in Table 1 and Table 2. Table 1 shows a constellation point probability distribution P_{A} of constellation shaping in 16QAM, or Table 1 shows a corresponding constellation point probability distribution after a trade-off (Trade-off)/compromise between communication performance and sensing performance in 16QAM. Table 2 shows a constellation point probability distribution P_{A} of constellation shaping in 64QAM, or Table 2 shows a corresponding constellation point probability distribution after a trade-off (Trade-off)/compromise between communication performance and sensing performance in 64QAM. The constellation point probability distribution P_{A} shown in Table 1 includes probability values of 16 constellation points, and the constellation point probability distribution P_{A} shown in Table 2 includes probability values of 64 constellation points. It may be understood that, for 16QAM, before the trade-off between the communication performance and the sensing performance, probability values of all constellation points are equal, and are 1/16 (equal to 0.0625); and for 64QAM, before the trade-off between the communication performance and the sensing performance, probability values of all constellation points are equal, and are 1/64 (approximately equal to 0.0156).

It may further be understood that, for QAM of a same modulation order, constellation shaping (or a trade-off between communication performance and sensing performance) in this embodiment of this application does not change a number of constellation points. For example, the number of constellation points in 16QAM is 16 before and after the trade-off between the communication performance and the sensing performance. Similarly, the number of constellation points in 64QAM is 64 before and after the trade-off between the communication performance and the sensing performance.

**Table 1**

| | 1 | 2 | 3 | 4 |
|---|---|---|---|---|
| 1 | 0.0156 | 0.1094 | 0.1094 | 0.0156 |
| 2 | 0.1094 | 0.0156 | 0.0156 | 0.1094 |
| 3 | 0.1094 | 0.0156 | 0.0156 | 0.1094 |
| 4 | 0.0156 | 0.1094 | 0.1094 | 0.0156 |

**Table 2**

| | 1 | 2 | 3 | 4 | 5 | 6 | 7 | 8 |
|---|---|---|---|---|---|---|---|---|
| 1 | 0.0061 | 0.0108 | 0.0204 | 0.0217 | 0.0204 | 0.0204 | 0.0108 | 0.0061 |
| 2 | 0.0108 | 0.0217 | 0.0192 | 0.0176 | 0.0176 | 0.0192 | 0.0217 | 0.0108 |
| 3 | 0.0204 | 0.0192 | 0.0134 | 0.0105 | 0.0105 | 0.0134 | 0.0192 | 0.0204 |
| 4 | 0.0217 | 0.0176 | 0.0105 | 0.0085 | 0.0085 | 0.0105 | 0.0176 | 0.0217 |
| 5 | 0.0217 | 0.0176 | 0.0105 | 0.0085 | 0.0085 | 0.0105 | 0.0176 | 0.0217 |
| 6 | 0.0204 | 0.0192 | 0.0134 | 0.0105 | 0.0105 | 0.0134 | 0.0192 | 0.0204 |
| 7 | 0.0108 | 0.0217 | 0.0192 | 0.0176 | 0.0176 | 0.0192 | 0.0217 | 0.0108 |
| 8 | 0.0061 | 0.0108 | 0.0204 | 0.0217 | 0.0217 | 0.0204 | 0.0108 | 0.0061 |

It may be understood that, in actual application, for implementation flexibility, a probability of a constellation point of constellation shaping may be nominally a range, and is not necessarily a single value. In other words, when the probability of the constellation point is standardized (or predefined in a standard protocol), a probability of each constellation point is not required to strictly reach a value, and may be a probability range. For example, as shown in Table 1, for a constellation point (2, 3) in the second row and the third column, a probability of the constellation point is 0.0156, and the other constellation points meet corresponding probability values. In this case, constellation shaping in 16QAM is formed. When a probability range is used, the probability of the constellation point may be any value from 0.1 to 0.2, and correspondingly, probabilities of the other constellation points may also be a value range. In this case, constellation shaping in 16QAM is formed. This can improve the implementation flexibility.

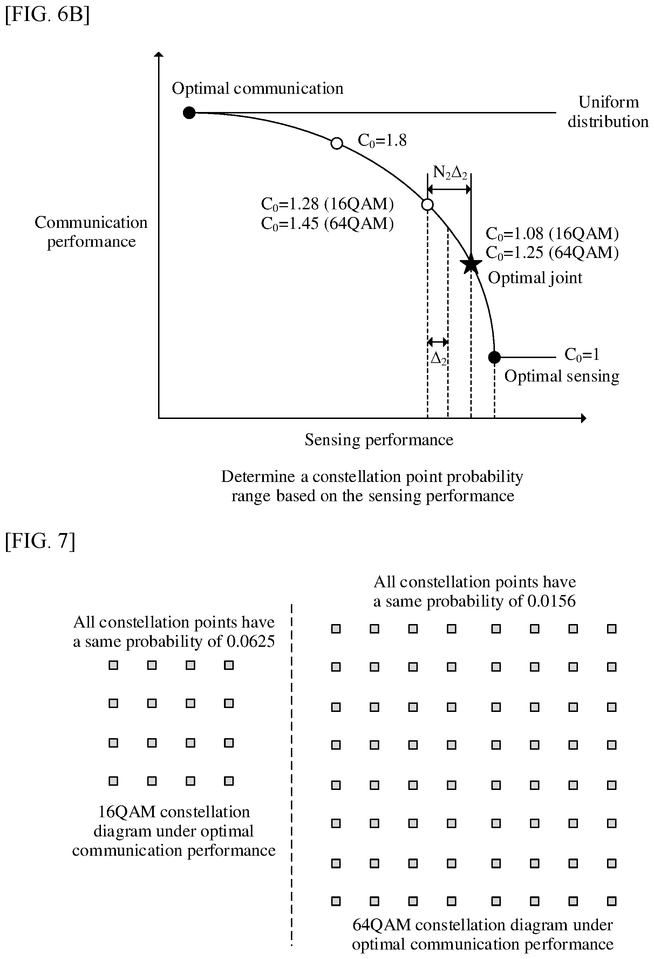

In a possible implementation, the following uses 16QAM and 64QAM as examples to describe several manners of selecting a probability range (or a probability interval) of a constellation point of constellation shaping. FIG. 6A and FIG. 6B are diagrams of values within a constellation point probability range according to this embodiment of this application. As shown in FIG. 6A and FIG. 6B, for a given modulation scheme (16QAM or 64QAM), constellation point probabilities in a uniform distribution correspond to an "optimal communication (performance)" point, and an "optimal sensing (performance)" point and an "optimal joint (communication performance and sensing performance)"point may be obtained through joint optimization of the communication performance and the sensing performance (for example, joint optimization of a fourth-order moment of a QAM signal amplitude and a communication achievable rate). During "optimal sensing", a fourth-order moment C₀ of 16QAM and a fourth-order moment C₀ of 64QAM are equal to 1; and during "optimal joint", the fourth-order moment C₀ of 16QAM is equal to 1.08, and the fourth-order moment C₀ of 64QAM is equal to 1.25.

For example, values within the constellation point probability range may be obtained in two possible manners.

Manner 1: The constellation point probability range is determined based on the communication performance. As shown in FIG. 6A, the communication performance is divided at equal intervals, and N₁ communication performance ranges (N₁Δ₁) near an optimal point (for example, the "optimal communication" point or the "optimal joint" point) are used as a value range of the constellation point probabilities. For example, the communication performance range may be set to a minimum quantization unit (for example, a minimum unit is 0.01 or 1/R), to facilitate calculation of the constellation point probability range.

Manner 2: The constellation point probability range is determined based on the sensing performance. As shown in FIG. 6B, the sensing performance is sampled at equal intervals, and N₂ sensing performance ranges (N₂Δ₂) near an optimal point (for example, the "optimal joint" point or the "optimal sensing" point) are used as a value range of the constellation point probabilities. For example, the sensing performance range may be set to a minimum quantization unit (for example, a minimum unit is 0.01 or 1/R), to facilitate calculation of the constellation point probability range.

For QAM, constellation point probabilities in an existing communication system comply with a uniform distribution, for example, the "optimal communication" point in FIG. 6A and FIG. 6B. In this case, probabilities of all constellation points in 16QAM are all 1/16, as shown in Table 3a; and probabilities of all constellation points in 64QAM are all 1/64, as shown in Table 3b. At the "optimal communication" point, constellation diagrams of 16QAM and 64QAM are shown in FIG. 7. It may be understood that, at the "optimal communication" point, the system has optimal communication performance, but has poor sensing performance.

**Table 3a**

| | 1 | 2 | 3 | 4 |
|---|---|---|---|---|
| 1 | 0.0625 | 0.0625 | 0.0625 | 0.0625 |
| 2 | 0.0625 | 0.0625 | 0.0625 | 0.0625 |
| 3 | 0.0625 | 0.0625 | 0.0625 | 0.0625 |
| 4 | 0.0625 | 0.0625 | 0.0625 | 0.0625 |

**Table 3b**

| | 1 | 2 | 3 | 4 | 5 | 6 | 7 | 8 |
|---|---|---|---|---|---|---|---|---|
| 1 | 0.0156 | 0.0156 | 0.0156 | 0.0156 | 0.0156 | 0.0156 | 0.0156 | 0.0156 |
| 2 | 0.0156 | 0.0156 | 0.0156 | 0.0156 | 0.0156 | 0.0156 | 0.0156 | 0.0156 |
| 3 | 0.0156 | 0.0156 | 0.0156 | 0.0156 | 0.0156 | 0.0156 | 0.0156 | 0.0156 |
| 4 | 0.0156 | 0.0156 | 0.0156 | 0.0156 | 0.0156 | 0.0156 | 0.0156 | 0.0156 |
| 5 | 0.0156 | 0.0156 | 0.0156 | 0.0156 | 0.0156 | 0.0156 | 0.0156 | 0.0156 |
| 6 | 0.0156 | 0.0156 | 0.0156 | 0.0156 | 0.0156 | 0.0156 | 0.0156 | 0.0156 |
| 7 | 0.0156 | 0.0156 | 0.0156 | 0.0156 | 0.0156 | 0.0156 | 0.0156 | 0.0156 |
| 8 | 0.0156 | 0.0156 | 0.0156 | 0.0156 | 0.0156 | 0.0156 | 0.0156 | 0.0156 |

For example, in Manner 1, the constellation point probability range is determined based on the communication performance, and constellation point probabilities within a specific range on a right side of the "optimal communication" point in FIG. 6A are selected. As shown in FIG. 6A, it is assumed that a fourth-order moment C₀ of a right boundary point selected at this time is equal to 1.8. Constellation point probabilities in 16QAM that correspond to the right boundary point (C₀=1.8) are shown in Table 4a below, in other words, Table 4a shows the constellation point probabilities in 16QAM at C₀=1.8; and constellation point probabilities in 64QAM that correspond to the right boundary point (C₀=1.8) are shown in Table 4b below, in other words, Table 4b shows the constellation point probabilities in 64QAM at C₀=1.8. For example, Table 3a and Table 4a may form a constellation point probability range of constellation shaping in 16QAM, as shown in Table 5a. Similarly, Table 3b and Table 4b may form a constellation point probability range of constellation shaping in 64QAM, as shown in Table 5b.

**Table 4a**

| | 1 | 2 | 3 | 4 |
|---|---|---|---|---|
| 1 | 0.1250 | 0 | 0 | 0.1250 |
| 2 | 0 | 0.1250 | 0.1250 | 0 |
| 3 | 0 | 0.1250 | 0.1250 | 0 |
| 4 | 0.1250 | 0 | 0 | 0.1250 |

**Table 4b**

| | 1 | 2 | 3 | 4 | 5 | 6 | 7 | 8 |
|---|---|---|---|---|---|---|---|---|
| 1 | 0.0583 | 0.0090 | 0.0071 | 0.0069 | 0.0069 | 0.0071 | 0.0090 | 0.0583 |
| 2 | 0.0090 | 0.0069 | 0.0077 | 0.0088 | 0.0088 | 0.0077 | 0.0069 | 0.0090 |
| 3 | 0.0071 | 0.0077 | 0.0108 | 0.0154 | 0.0154 | 0.0108 | 0.0077 | 0.0071 |
| 4 | 0.0069 | 0.0088 | 0.0154 | 0.0647 | 0.0647 | 0.0154 | 0.0088 | 0.0069 |
| 5 | 0.0069 | 0.0088 | 0.0154 | 0.0647 | 0.0647 | 0.0154 | 0.0088 | 0.0069 |
| 6 | 0.0071 | 0.0077 | 0.0108 | 0.0154 | 0.0154 | 0.0108 | 0.0077 | 0.0071 |
| 7 | 0.0090 | 0.0069 | 0.0077 | 0.0088 | 0.0088 | 0.0077 | 0.0069 | 0.0090 |
| 8 | 0.0583 | 0.0090 | 0.0071 | 0.0069 | 0.0069 | 0.0071 | 0.0090 | 0.0583 |

**Table 5a**

| | 1 | 2 | 3 | 4 |
|---|---|---|---|---|
| 1 | 0.0625 to 0.1250 | 0 to 0.0625 | 0 to 0.0625 | 0.0625 to 0.1250 |
| 2 | 0 to 0.0625 | 0.0625 to 0.1250 | 0.0625 to 0.1250 | 0 to 0.0625 |
| 3 | 0 to 0.0625 | 0.0625 to 0.1250 | 0.0625 to 0.1250 | 0 to 0.0625 |
| 4 | 0.0625 to 0.1250 | 0 to 0.0625 | 0 to 0.0625 | 0.0625 to 0.1250 |

**Table 5b**

| | 1 | 2 | 3 | 4 | 5 | 6 | 7 | 8 |
|---|---|---|---|---|---|---|---|---|
| 1 | 0.0156 to 0.0583 | 0.0090 to 0.0156 | 0.0071 to 0.0156 | 0.0069 to 0.0156 | 0.0069 to 0.0156 | 0.0071 to 0.0156 | 0.0090 to 0.0156 | 0.0156 to 0.0583 |
| 2 | 0.0090 to 0.0156 | 0.0069 to 0.0156 | 0.0077 to 0.0156 | 0.0088 to 0.0156 | 0.0088 to 0.0156 | 0.0077 to 0.0156 | 0.0069 to 0.0156 | 0.0090 to 0.0156 |
| 3 | 0.0071 to 0.0156 | 0.0077 to 0.0156 | 0.0108 to 0.0156 | 0.0154 to 0.0156 | 0.0154 to 0.0156 | 0.0108 to 0.0156 | 0.0077 to 0.0156 | 0.0071 to 0.0156 |
| 4 | 0.0069 to 0.0156 | 0.0088 to 0.0156 | 0.0154 to 0.0156 | 0.0156 to 0.0647 | 0.0156 to 0.0647 | 0.0154 to 0.0156 | 0.0088 to 0.0156 | 0.0069 to 0.0156 |
| 5 | 0.0069 to 0.0156 | 0.0088 to 0.0156 | 0.0154 to 0.0156 | 0.0156 to 0.0647 | 0.0156 to 0.0647 | 0.0154 to 0.0156 | 0.0088 to 0.0156 | 0.0069 to 0.0156 |
| 6 | 0.0071 to 0.0156 | 0.0077 to 0.0156 | 0.0108 to 0.0156 | 0.0154 to 0.0156 | 0.0154 to 0.0156 | 0.0108 to 0.0156 | 0.0077 to 0.0156 | 0.0071 to 0.0156 |
| 7 | 0.0090 to 0.0156 | 0.0069 to 0.0156 | 0.0077 to 0.0156 | 0.0088 to 0.0156 | 0.0088 to 0.0156 | 0.0077 to 0.0156 | 0.0069 to 0.0156 | 0.0090 to 0.0156 |
| 8 | 0.0156 to 0.0583 | 0.0090 to 0.0156 | 0.0071 to 0.0156 | 0.0069 to 0.0156 | 0.0069 to 0.0156 | 0.0071 to 0.0156 | 0.0090 to 0.0156 | 0.0156 to 0.0583 |

It may be understood that, at the "optimal sensing" point in FIG. 6A and FIG. 6B, the system has optimal sensing performance, but has worst communication performance, and a constellation diagram corresponding to the point is constant-modulus (or constant-envelope) or approximately constant-modulus (or approximately constant-envelope). In this case, at the "optimal sensing" point (C₀=1), constellation point probabilities in 16QAM are shown in Table 6a, and constellation point probabilities in 64QAM are shown in Table 6b.

**Table 6a**

| | 1 | 2 | 3 | 4 |
|---|---|---|---|---|
| 1 | 0 | 0.1250 | 0.1250 | 0 |
| 2 | 0.1250 | 0 | 0 | 0.1250 |
| 3 | 0.1250 | 0 | 0 | 0.1250 |
| 4 | 0 | 0.1250 | 0.1250 | 0 |

**Table 6b**

| | 1 | 2 | 3 | 4 | 5 | 6 | 7 | 8 |
|---|---|---|---|---|---|---|---|---|
| 1 | 0 | 0 | 0 | 0.0417 | 0.0417 | 0 | 0 | 0 |
| 2 | 0 | 0.0417 | 0.0625 | 0 | 0 | 0.0625 | 0.0417 | 0 |
| 3 | 0 | 0.0625 | 0 | 0 | 0 | 0 | 0.0625 | 0 |
| 4 | 0.0417 | 0 | 0 | 0 | 0 | 0 | 0 | 0.0417 |
| 5 | 0.0417 | 0 | 0 | 0 | 0 | 0 | 0 | 0.0417 |
| 6 | 0 | 0.0625 | 0 | 0 | 0 | 0 | 0.0625 | 0 |
| 7 | 0 | 0.0417 | 0.0625 | 0 | 0 | 0.0625 | 0.0417 | 0 |
| 8 | 0 | 0 | 0 | 0.0417 | 0.0417 | 0 | 0 | 0 |

As shown in FIG. 6A and FIG. 6B, for 16QAM, a fourth-order moment C₀ corresponding to the "optimal joint" point is equal to 1.08; and for 64QAM, a fourth-order moment C₀ corresponding to the "optimal joint" point is equal to 1.25. For example, in Manner 2, the constellation point probability range is determined based on the sensing performance, and constellation point probabilities within a specific range on a left side of the "optimal joint" point in FIG. 6B are selected. As shown in FIG. 6B, it is assumed that a fourth-order moment C₀ of a left boundary point selected at this time in 16QAM is equal to 1.28, that is, C₀=1.28 (16QAM); and a fourth-order moment C₀ in 64QAM is equal to 1.45, that is, C₀=1.45 (64QAM). Constellation point probabilities in 16QAM that correspond to the left boundary point are shown in Table 7a, in other words, Table 7a shows the constellation point probabilities in 16QAM at C₀=1.28. Constellation point probabilities in 64QAM that correspond to the left boundary point are shown in Table 7b, in other words, Table 7b shows the constellation point probabilities in 64QAM at C₀=1.45. For example, Table 6a and Table 7a may form a constellation point probability range of constellation shaping in 16QAM, as shown in Table 8a. Similarly, Table 6b and Table 7b may form a constellation point probability range of constellation shaping in 64QAM, as shown in Table 8b.

**Table 7a**

| | 1 | 2 | 3 | 4 |
|---|---|---|---|---|
| 1 | 0.0547 | 0.0703 | 0.0703 | 0.0547 |
| 2 | 0.0703 | 0.0547 | 0.0547 | 0.0703 |
| 3 | 0.0703 | 0.0547 | 0.0547 | 0.0703 |
| 4 | 0.0547 | 0.0703 | 0.0703 | 0.0547 |

**Table 7b**

| | 1 | 2 | 3 | 4 | 5 | 6 | 7 | 8 |
|---|---|---|---|---|---|---|---|---|
| 1 | 0.0225 | 0.0151 | 0.0139 | 0.0137 | 0.0137 | 0.0139 | 0.0151 | 0.0225 |
| 2 | 0.0151 | 0.0137 | 0.0141 | 0.0147 | 0.0147 | 0.0141 | 0.0137 | 0.0151 |
| 3 | 0.0139 | 0.0141 | 0.0156 | 0.0169 | 0.0169 | 0.0156 | 0.0141 | 0.0139 |
| 4 | 0.0137 | 0.0147 | 0.0169 | 0.0214 | 0.0214 | 0.0169 | 0.0147 | 0.0137 |
| 5 | 0.0137 | 0.0147 | 0.0169 | 0.0214 | 0.0214 | 0.0169 | 0.0147 | 0.0137 |
| 6 | 0.0139 | 0.0141 | 0.0156 | 0.0169 | 0.0169 | 0.0156 | 0.0141 | 0.0139 |
| 7 | 0.0151 | 0.0137 | 0.0141 | 0.0147 | 0.0147 | 0.0141 | 0.0137 | 0.0151 |
| 8 | 0.0225 | 0.0151 | 0.0139 | 0.0137 | 0.0137 | 0.0139 | 0.0151 | 0.0225 |

**Table 8a**

| | 1 | 2 | 3 | 4 |
|---|---|---|---|---|
| 1 | 0 to 0.0547 | 0.0703 to 0.1250 | 0.0703 to 0.1250 | 0 to 0.0547 |
| 2 | 0.0703 to 0.1250 | 0 to 0.0547 | 0 to 0.0547 | 0.0703 to 0.1250 |
| 3 | 0.0703 to 0.1250 | 0 to 0.0547 | 0 to 0.0547 | 0.0703 to 0.1250 |
| 4 | 0 to 0.0547 | 0.0703 to 0.1250 | 0.0703 to 0.1250 | 0 to 0.0547 |

**Table 8b**

| | 1 | 2 | 3 | 4 | 5 | 6 | 7 | 8 |
|---|---|---|---|---|---|---|---|---|
| 1 | 0 to 0.0225 | 0 to 0.0151 | 0 to 0.0139 | 0.0137 to 0.0417 | 0.0137 to 0.0417 | 0 to 0.0139 | 0 to 0.0151 | 0 to 0.0225 |
| 2 | 0 to 0.0151 | 0.0137 to 0.0417 | 0.0141 to 0.0625 | 0 to 0.0147 | 0 to 0.0147 | 0.0141 to 0.0625 | 0.0137 to 0.0417 | 0 to 0.0151 |
| 3 | 0 to 0.0139 | 0.0141 to 0.0625 | 0 to 0.0156 | 0 to 0.0169 | 0 to 0.0169 | 0 to 0.0156 | 0.0141 to 0.0625 | 0 to 0.0139 |
| 4 | 0.0137 to 0.0417 | 0 to 0.0147 | 0 to 0.0169 | 0 to 0.0214 | 0 to 0.0214 | 0 to 0.0169 | 0 to 0.0147 | 0.0137 to 0.0417 |
| 5 | 0.0137 to 0.0417 | 0 to 0.0147 | 0 to 0.0169 | 0 to 0.0214 | 0 to 0.0214 | 0 to 0.0169 | 0 to 0.0147 | 0.0137 to 0.0417 |
| 6 | 0 to 0.0139 | 0.0141 to 0.0625 | 0 to 0.0156 | 0 to 0.0169 | 0 to 0.0169 | 0 to 0.0156 | 0.0141 to 0.0625 | 0 to 0.0139 |
| 7 | 0 to 0.0151 | 0.0137 to 0.0417 | 0.0141 to 0.0625 | 0 to 0.0147 | 0 to 0.0147 | 0.0141 to 0.0625 | 0.0137 to 0.0417 | 0 to 0.0151 |
| 8 | 0 to 0.0225 | 0 to 0.0151 | 0 to 0.0139 | 0 to 0.0137 | 0 to 0.0137 | 0 to 0.0139 | 0 to 0.0151 | 0 to 0.0225 |

It may be understood that the probability values or the probability ranges shown in Table 1 to Table 8b are all examples. Specific probability values of constellation points of constellation shaping are not limited in embodiments of this application. In actual application, a transmitter and a receiver (or two communication parties, or a data transmitter and a data receiver) only need to agree on the probability values of the constellation points of constellation shaping.

In a possible implementation, in this embodiment of this application, QAM of different modulation orders and constellation point probability ranges that correspond to QAM may be predefined in a standard protocol.

In a possible implementation, a communication apparatus may first determine a modulation order M of QAM, and then obtain probabilities of constellation points of constellation shaping at the modulation order M (or M-QAM). The probabilities of the constellation points of constellation shaping may be predefined in a standard protocol, or determined based on a probability range predefined in a standard protocol, or preconfigured, or obtained from another communication apparatus. This is not limited in embodiments of this application. It may be understood that the modulation order M of QAM may be a positive integer, for example, M is 4, 8, 16, 64, or 256. For example, the communication apparatus (the transmitter) may determine the modulation order M of QAM based on a communication requirement and/or a channel environment of the communication apparatus; and then select a corresponding constellation point probability distribution P_{A} (that is, a probability of each constellation point) based on the modulation order M, or determine a probability value of each constellation point from a probability range that is of the constellation point and that corresponds to the modulation order M. It may be understood that, to enable the receiver to correctly obtain communication data through demodulation, the transmitter and the receiver need to align modulation orders M of QAM and probabilities of constellation points of constellation shaping. For example, for a manner in which the receiver and the transmitter align the modulation orders M of QAM and the probabilities of the constellation points of constellation shaping, refer to descriptions of the following embodiments. Details are not described herein. In the constellation point probability distribution P_{A} in this embodiment of this application, the number R of constellation points is equal to the modulation order M of QAM.

S102: Encode a binary bitstream via a constant composition distribution matcher based on the constellation point probability distribution P_{A}, to obtain a plurality of bit sequences with an equal length.

S103: Perform bitwise combination on the plurality of bit sequences with the equal length, and then one-to-one map combination results to the constellation points in the modulation scheme, to obtain a constellation (or a waveform) after constellation shaping.

In a possible implementation, the communication apparatus may determine a number of constellation points based on the modulation order M (16QAM is used as an example, M is equal to 16, and R is also equal to 16), then use a least common multiple m of a denominator of a probability of each constellation point of constellation shaping (as shown in Table 1) as an output length of the constant composition distribution matcher (constant composition distribution matching, CCDM), and use a numerator of the probability of each constellation point as a number of times that the constellation point appears in an output sequence whose length is m. A probability of each constellation point in a constellation diagram output through this process complies with the constellation point probability distribution P_{A} after the trade-off between the communication performance and the sensing performance. 16QAM is used as an example, and a probability of each constellation point in a constellation diagram output through the process complies with the probability value of the corresponding constellation point in Table 1. Then, the communication apparatus may calculate a number of combinations $K = {C}_{m}^{{s}_{1}} {C}_{m - {s}_{1}}^{{s}_{2}} … {C}_{{s}_{R}}^{{s}_{R}}$ as a maximum number of types of the output sequence. s₁ represents a numerator of a 1^{st} constellation point probability in the constellation point probability distribution P_{A} (16QAM is used as an example, as shown in Table 1), s₂ represents a numerator of a 2^{nd} constellation point probability in the constellation point probability distribution P_{A} (16QAM is used as an example, as shown in Table 1), and by analogy, s_{R} represents a numerator of an R^{th} constellation point probability in the constellation point probability distribution P_{A} (16QAM is used as an example, as shown in Table 1). Because an input is a random binary sequence, the communication apparatus may further calculate a number of input sequences k=floor(log₂K), where floor() represents "rounding down". Details are not described below.

In another possible implementation, the communication apparatus may determine a number of constellation points based on the modulation order M (16QAM is used as an example, M is equal to 16, and R is also equal to 16), and then approximate probability values of constellation points of constellation shaping (as shown in Table 1), so that the probability values have a same denominator m (for example, $m = {2}^{\left(\sqrt{M}+2\right)}$). Similarly, m is used as an output length of a CCDM, and a numerator of a probability of each constellation point represents a number of times that the constellation point appears in an output sequence whose length is m. A probability of each constellation point in a constellation diagram output through this process is an approximate value of a constellation point probability after the trade-off between the communication performance and the sensing performance, and a probability distribution output through the process is basically consistent with that in Table 1. 16QAM is used as an example, a probability of each constellation point in a constellation diagram output through the process is approximate to a probability value of the corresponding constellation point in Table 1, and a probability distribution output through the process is basically consistent with that in Table 1. Then, the communication apparatus may calculate a number of combinations $K = {C}_{m}^{{s}_{1}} {C}_{m - {s}_{1}}^{{s}_{2}} … {C}_{{s}_{R}}^{{s}_{R}}$ as a maximum number of types of the output sequence. s₁ represents a numerator after a 1^{st} constellation point probability in the constellation point probability distribution P_{A} (16QAM is used as an example, as shown in Table 1) is approximated, s₂ represents a numerator after a 2^{nd} constellation point probability in the constellation point probability distribution P_{A} (16QAM is used as an example, as shown in Table 1) is approximated, and by analogy, s_{R} represents a numerator after an R^{th} constellation point probability in the constellation point probability distribution P_{A} (16QAM is used as an example, as shown in Table 1) is approximated. Because an input is a random binary sequence, the communication apparatus may further calculate a number of input sequences k=floor(log₂K).

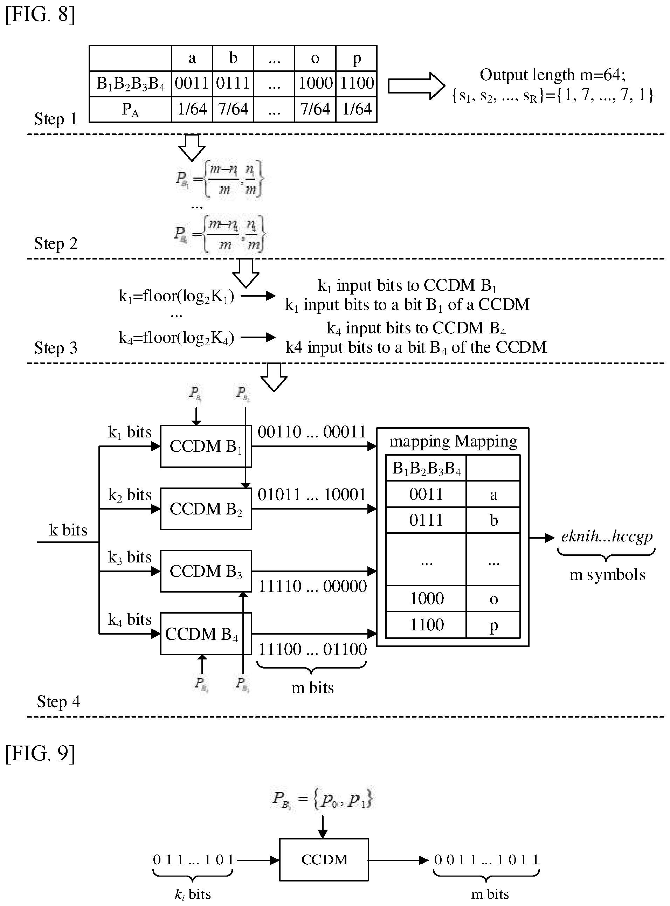

For example, FIG. 8 is a possible diagram of 16QAM constellation shaping according to an embodiment of this application. The constellation point probability distribution P_{A} shown in Table 1 is used as an example. As shown in step 1 in FIG. 8, the least common multiple m of the denominator in Table 1 is 64, in other words, the output length m of the CCDM is 64, and numerators {s₁, s₂, ..., s_{R}} of the constellation point probabilities in Table 1 are {1, 7, ..., 7, 1}. It may be understood that each constellation symbol in 16QAM may be represented by 4 bits, which are denoted as B₁, B₂, B₃, and B₄ respectively. In a possible implementation, the communication apparatus may determine a number of bits of each constellation symbol as a number of parallel CCDMs, and may calculate a probability that each bit is "0" in the output sequence. 16QAM is used as an example, and probabilities that a bit B₁, a bit B₂, a bit B₃, and a bit B₄ are "0" in the output sequence may be calculated. Because the denominator of the probability is the length m of the output sequence, the numerators represent a number of different bits that are "0" in the output sequence, and are denoted as n₁, n₂, n₃, and n₄. nᵢ is equal to a sum of a Bᵢ bit of each constellation point multiplied by a numerator {s₁, s₂, ..., s_{R}} of a corresponding constellation point probability. For example, as shown in FIG. 8, ni=0×1+0×7+...+1×7+1×1, and n₂=0×1+1×7+...+0×7+1×1.

As shown in step 2 in FIG. 8, *P*_{*B*₁} represents a probability $\frac{{n}_{1}}{m}$ that the bit B₁ is "1" in the output sequence whose length is m bits, and a probability ( $\frac{m - {n}_{1}}{m}$) that the bit B₁ is "0"; *P*_{*B*₂} represents a probability $\frac{{n}_{2}}{m}$ that the bit B₂ is "1" in the output sequence whose length is m bits, and a probability ( $\frac{m - {n}_{2}}{m}$) that the bit B₂ is "0"; and by analogy, *P*_{*B*₄} represents a probability $\frac{{n}_{4}}{m}$ that the bit B₄ is "1" in the output sequence whose length is m bits, and a probability ( $\frac{m - {n}_{4}}{m}$) that the bit B₄ is "0".

Then, the communication apparatus may calculate an input length of each parallel CCDM, which is denoted as k₁, k₂, k₃, and k₄, and k=k₁+k₂+k₃+k₄ is satisfied. As shown in step 3 in FIG. 8, kᵢ=floor(log₂Kᵢ), and ${K}_{i} = {C}_{m}^{\left(m-{n}_{i}\right)} \times {C}_{{n}_{i}}^{{n}_{i}}$. As shown in step 4 in FIG. 8, each parallel CCDM encodes a binary sequence whose input length is kᵢ into a binary sequence whose length is m. In this case, constellation shaping ends. FIG. 9 is a diagram of CCDM encoding according to an embodiment of this application. As shown in FIG. 9, the CCDM encodes, under control of the probability *P_{Bᵢ}*, a binary sequence whose input length is kᵢ into a binary sequence whose length is m. *P_{Bᵢ}* includes p₀ and p₁, p₀ represents a probability that a Bᵢ bit is "0" in an output sequence whose length is m bits, and p₁ represents a probability that the Bᵢ bit is "1" in the output sequence whose length is m bits.

In a possible implementation, after constellation shaping, the communication apparatus may perform bitwise combination on bit sequences output by parallel CCDMs, and one-to-one map combination results to the constellation points. As shown in FIG. 8, a distribution of constellation points in the generated sequence is consistent with a probability distribution in step 1 in FIG. 8. A constellation (or a waveform) after optimization (or constellation shaping) may be obtained through the process shown in FIG. 8.

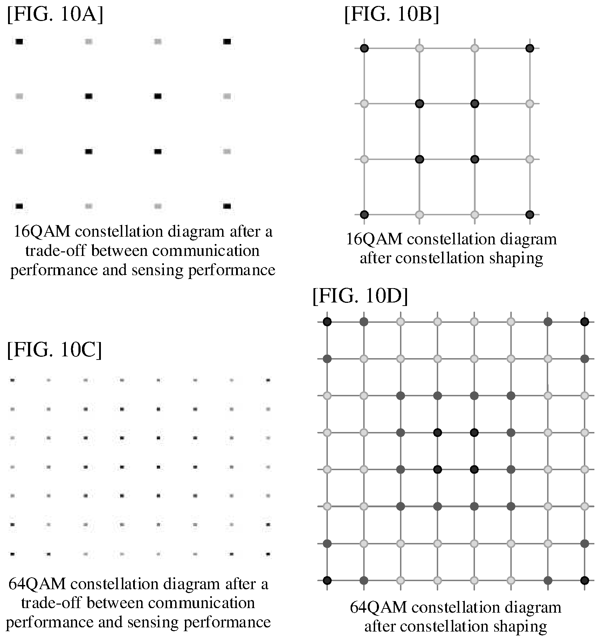

FIG. 10A to FIG. 10D show expected constellation diagrams and constellation diagrams obtained after constellation shaping according to an embodiment of this application. The expected constellation diagram may be a QAM constellation diagram, after a trade-off between communication performance and sensing performance, obtained through joint optimization of a fourth-order moment of a QAM signal amplitude and a communication achievable rate. The constellation diagram may be understood as a theoretical diagram. The QAM constellation diagram obtained after constellation shaping may be understood as a QAM constellation diagram that is actually obtained after a series of processing (that is, constellation shaping, for example, the steps shown in FIG. 8) are performed by using an expected QAM constellation diagram as a target. It can be seen from FIG. 10A and FIG. 10B that, in 16QAM, an expected constellation diagram is consistent with a constellation diagram obtained after constellation shaping. It can be seen from FIG. 10C and FIG. 10D that, in 64QAM, an expected constellation diagram is also consistent with a constellation diagram obtained after constellation shaping. In FIG. 10A to FIG. 10D, a deeper color of a constellation point indicates a smaller probability value of the constellation point.

In a possible implementation, after obtaining the constellation (or the waveform) after constellation shaping, the communication apparatus (the transmitter) may perform subsequent processing (for example, shown in FIG. 4a) on the constellation (or the waveform), and then transmit a signal via an analog and radio frequency module. After receiving a baseband signal via a digital and radio frequency module, the receiver obtains a modulation symbol sequence through various processing (for example, shown in FIG. 4b). For a sensing task, the received modulation symbol sequence and a modulation symbol sequence sent by the transmitter are used together to complete the sensing task. For a communication task, constellation shaping dematching is performed on the received modulation symbol sequence based on the probability value of each constellation point of constellation shaping, to obtain a binary bit sequence. It may be understood that constellation shaping dematching at the receiver is an inverse process of constellation shaping at the transmitter. Details are not described in this application.

In this embodiment of this application, for a non-constant-modulus (or non-constant-envelope) modulation signal, a specific constellation point probability distribution is obtained through joint optimization of the communication performance and the sensing performance. The constellation point probability distribution is the trade-off between the communication performance and the sensing performance. In addition, for a same modulation scheme, a number of constellation points after optimization is consistent with a number of constellation points before optimization, but probabilities of constellation points with different amplitudes are different. In other words, in a constellation diagram obtained through joint optimization in this embodiment of this application, all constellation points in an original constellation diagram are reserved, but probabilities of constellation points are not completely the same. It may be understood that the constellation points in the original constellation are in a uniform distribution, and constellation points in the constellation obtained through optimization are in a specific distribution (non-uniform distribution). In this embodiment of this application, the parallel CCDM performs constellation shaping on the binary sequence, to obtain a new constellation (or waveform), and a probability distribution in the constellation is consistent with the constellation point probability distribution obtained through joint optimization. Therefore, when the constellation (or waveform) is used for both communication and sensing in an ISAC system, the sensing performance can be improved while the communication performance is considered.

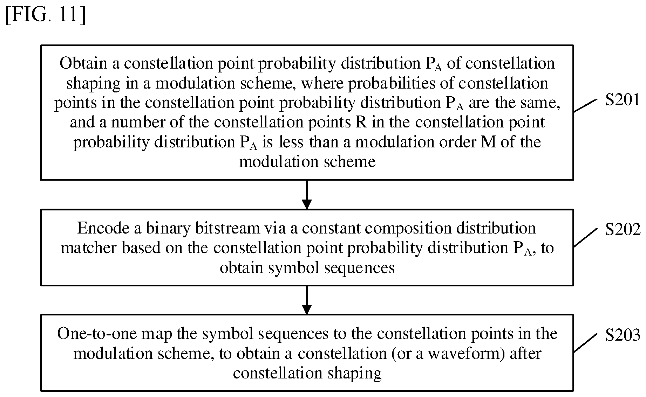

FIG. 11 is a schematic flowchart of another possible constellation shaping method according to an embodiment of this application. As shown in FIG. 11, the constellation shaping method includes but is not limited to the following steps.

S201: Obtain a constellation point probability distribution P_{A} of constellation shaping in a modulation scheme, where probabilities of constellation points in the constellation point probability distribution P_{A} are the same, and a number R of the constellation points in the constellation point probability distribution P_{A} is less than a modulation order M of the modulation scheme.

In a possible implementation, for a non-constant-envelope (or non-constant-modulus) QAM signal (for example, 16QAM and 64QAM) in this embodiment of this application, constellation points that meet this condition (for example, a QAM signal amplitude falls within a specific range) are reserved through joint optimization of a range of the QAM signal amplitude (which affects sensing performance) and a number of constellation points (which affects communication performance) based on requirements for the communication performance and the sensing performance, the reserved constellation points comply with an equal probability distribution, and probabilities of constellation points that do not meet the condition are all zero, to obtain a trade-off (Trade-off)/compromise between the communication performance and the sensing performance and a corresponding constellation point probability distribution P_{A} under the trade-off (Trade-off)/compromise, that is, a probability value of each constellation point. A difference from the embodiment shown in FIG. 5 includes: In this embodiment of this application, there are a plurality of constellation points whose probabilities are 0 in the constellation point probability distribution P_{A} after optimization. In a possible implementation, if the constellation point whose probability is 0 is understood as that the constellation point does not exist, for QAM of a same modulation order, in this embodiment of this application, a number of constellation points after optimization is inconsistent with a number of constellation points before optimization. It may be understood that, for QAM of the same modulation order, in this embodiment of this application, probabilities of constellation points before optimization are equal, and probabilities of constellation points after optimization are still equal. However, the probabilities of the constellation points before optimization are not equal to the probabilities of the constellation points after optimization, and the number R of constellation points after optimization (which is a number of constellation points whose probabilities are not 0 after optimization) is less than the number of constellation points 2^{M} before optimization. It may be further understood that, for QAM of different modulation orders, different constellation point probability distributions P_{A} may be obtained through joint optimization of the range of the QAM signal amplitude (which affects the sensing performance) and the number of constellation points (which affects the communication performance).

In a possible implementation, in this embodiment of this application, QAM of different modulation orders and constellation point probability distributions P_{A} that correspond to QAM, that is, a probability value (which is not 0) of each constellation point, may be predefined in a standard protocol. It may be understood that, because the constellation point probabilities after optimization are equal in this embodiment of this application, in this embodiment of this application, QAM of the different modulation orders and a probability value of a constellation point corresponding to QAM may be predefined in the standard protocol. Optionally, in this embodiment of this application, QAM of the different modulation orders, the number R of constellation points (which is a number of constellation points after optimization) corresponding to QAM, and locations of the R constellation points may be further predefined in the standard protocol.

For example, 16QAM is used as an example. A constellation point probability distribution P_{A} under a trade-off (Trade-off)/compromise between communication performance and sensing performance may be obtained through joint optimization of a range of a 16QAM signal amplitude (which affects the sensing performance) and a number of constellation points (which affects the communication performance) based on requirements for the communication performance and the sensing performance, as shown in Table 9 below. In this embodiment of this application, for ease of understanding a difference between the constellation point probability obtained after optimization and the constellation point probability before optimization, the constellation points whose probabilities are 0 are shown in Table 9. The constellation point whose probability is 0 in Table 9 may be understood as that the constellation point does not exist.

**Table 9**

| | 1 | 2 | 3 | 4 |
|---|---|---|---|---|
| 1 | 0 | 0.1250 | 0.1250 | 0 |
| 2 | 0.1250 | 0 | 0 | 0.1250 |
| 3 | 0.1250 | 0 | 0 | 0.1250 |
| 4 | 0 | 0.1250 | 0.1250 | 0 |

In a possible implementation, a communication apparatus may first determine a modulation order M of QAM, further determine a number R of constellation points based on the modulation order M, and then obtain a probability of one or more constellation points of constellation shaping at the modulation order M (or M-QAM). The probability of the one or more constellation points of constellation shaping and/or the number R of constellation points may be predefined in a standard protocol, or preconfigured, or obtained from another communication apparatus. This is not limited in embodiments of this application. The locations of the R constellation points of constellation shaping may also be predefined in a standard protocol, or preconfigured, or obtained from another communication apparatus. This is not limited in embodiments of this application. For example, the communication apparatus (a transmitter) may determine the modulation order M of QAM based on a communication requirement and/or a channel environment of the communication apparatus; and then select a corresponding constellation point probability (a probability value of a constellation point) or a constellation point probability distribution P_{A} (for example, a probability of each constellation point) based on the modulation order M. For example, the communication apparatus (the transmitter) may further determine the number R of constellation points and the locations of the R constellation points based on the modulation order M. It may be understood that, to enable a receiver to correctly obtain communication data through demodulation, the transmitter and the receiver need to align the modulation orders M of QAM and the probabilities of the R constellation points of constellation shaping. For example, for a manner in which the receiver and the transmitter align the modulation orders M of QAM and the probabilities of the R constellation points of constellation shaping, refer to descriptions of the following embodiments. Details are not described herein. In the constellation point probability distribution P_{A} in this embodiment of this application, the number R of constellation points is less than to the modulation order M of QAM.

In this embodiment of this application, the locations of the R constellation points may be understood as locations of the R constellation points in the M constellation points, or locations of the R constellation points in a constellation diagram before optimization.

S202: Encode a binary bitstream via a constant composition distribution matcher based on the constellation point probability distribution P_{A}, to obtain symbol sequences.

S203: One-to-one map the symbol sequences to the constellation points in the modulation scheme, to obtain a constellation (or a waveform) after constellation shaping.

In a possible implementation, the communication apparatus may determine the number R of constellation points based on the modulation order M (16QAM is used as an example, M is equal to 16, and R is equal to 8), then use a least common multiple m of a denominator of a probability of each constellation point of constellation shaping (as shown in Table 9) as an output length of a CCDM, and use a numerator of the probability of each constellation point as a number of times that the constellation point appears in an output sequence whose length is m. The output sequence is a symbol sequence instead of a bit sequence. In this case, an input length of the CCDM is m bits.

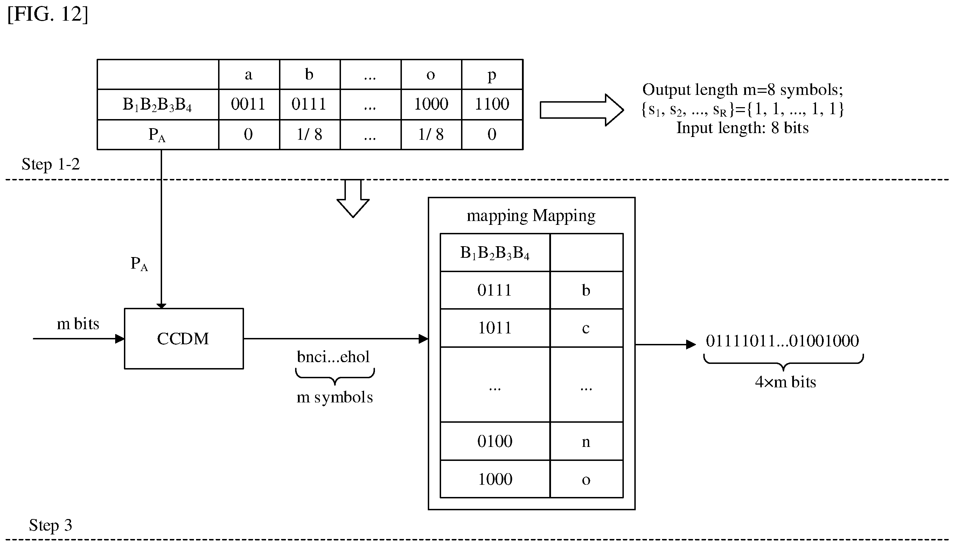

For example, FIG. 12 is another possible diagram of 16QAM constellation shaping according to an embodiment of this application. The constellation point probability distribution P_{A} (only constellation points whose probabilities are not 0 are considered) shown in Table 9 is used as an example. As shown in step 1-2 in FIG. 12, the least common multiple m of the denominator in Table 9 is 8, in other words, the output length of the CCDM is 8 symbols (symbols), and the input length is 8 bits (bits). Numerators {s₁, s₂, ..., s₈} of constellation point probabilities in Table 9 are {1, 1, ..., 1, 1}.

Then, the communication apparatus may encode a binary sequence via the CCDM based on the probabilities of the constellation points (that is, the constellation point probability distribution P_{A}) of constellation shaping, the number of times that each constellation point appears in the output sequence whose length is m, the input length of the CCDM, and the output length of the CCDM, as shown in step 3 in FIG. 12. For example, the CCDM reads a bit sequence whose length is m each time for encoding, and correspondingly outputs a symbol sequence whose length is m. In this case, constellation shaping ends. A number of types of symbols in the symbol sequence is the number R of constellation points (for example, in 16QAM, R=8) with non-zero probabilities, and numbers of times that all types of symbols appear in the symbol sequence are {s₁, s₂, ..., s_{R}}.

In a possible implementation, the communication apparatus may map, to corresponding constellation points respectively based on constellation mapping in an original constellation, the symbol sequences output by the CCDM, as shown in FIG. 12, to obtain a constellation (or waveform) after optimization (or constellation shaping). As shown in FIG. 12, the constellation after constellation shaping in this embodiment of this application includes eight constellation points in the original constellation: 0111, 1011, 0010, 1110, 0001, 1101, 0100, and 1000, and the other eight constellation points (0011, 1111, 0110, 1010, 0101, 1001, 0000, 1100) in the original constellation are discarded. It may be understood that a probability of each constellation point in the constellation obtained through the process complies with the constellation point probability distribution P_{A} after the trade-off between the communication performance and the sensing performance in this embodiment of this application. 16QAM is used as an example, and a probability of each constellation point in the constellation obtained through the process shown in FIG. 12 complies with the probability value of the corresponding constellation point in Table 9.

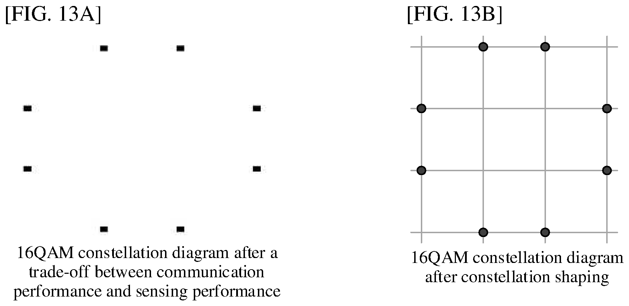

FIG. 13A and FIG. 13B show an expected 16QAM constellation diagram and a 16QAM constellation diagram obtained after constellation shaping according to an embodiment of this application. As shown in FIG. 13A and FIG. 13B, the expected 16QAM constellation diagram may be a 16QAM constellation diagram, after a trade-off between communication performance and sensing performance, obtained through joint optimization of a range of a 16QAM signal amplitude (which affects the sensing performance) and a number of constellation points (which affects the communication performance), and the 16QAM constellation diagram may be understood as a theoretical diagram. The 16QAM constellation diagram obtained after constellation shaping may be understood as a 16QAM constellation diagram that is actually obtained after a series of processing (that is, constellation shaping, for example, the steps shown in FIG. 12) are performed by using the expected 16QAM constellation diagram as a target. It can be seen from FIG. 13A and FIG. 13B that the constellation diagram after constellation shaping is consistent with the expected constellation diagram, and the two constellation diagrams are the same or similar. In FIG. 13A and FIG. 13B, a deeper color of a constellation point indicates a smaller probability value of the constellation point.

In a possible implementation, after obtaining the constellation (or the waveform) after constellation shaping, the communication apparatus (the transmitter) may perform subsequent processing (for example, shown in FIG. 4a) on the constellation (or the waveform), and then transmit a signal via an analog and radio frequency module. After receiving a baseband signal via a digital and radio frequency module, the receiver obtains a modulation symbol sequence through various processing (for example, shown in FIG. 4b). For a sensing task, the received modulation symbol sequence and a modulation symbol sequence sent by the transmitter are used together to complete the sensing task. For a communication task, constellation shaping dematching is performed on the received modulation symbol sequence based on the probability value of each constellation point of constellation shaping, to obtain a binary bit sequence. It may be understood that constellation shaping dematching at the receiver is an inverse process of constellation shaping at the transmitter. Details are not described in this application.

In this embodiment of this application, a specific constellation point probability distribution is obtained through joint optimization of the communication performance and the sensing performance. The constellation point probability distribution is a trade-off between the communication performance and the sensing performance. In addition, for a same modulation scheme, a number of constellation points after optimization is less than a number of constellation points before optimization, but probabilities of the constellation points after optimization are equal. In other words, in a constellation obtained through joint optimization in this embodiment of this application, some constellation points in an original constellation are reserved, and remaining constellation points are discarded; and constellation points in the constellation after optimization comply with a specific distribution. In this embodiment of this application, the CCDM performs constellation shaping on the binary sequence, to obtain a new constellation (or waveform), and a probability distribution in the constellation is consistent with the constellation point probability distribution obtained through joint optimization. Therefore, when the constellation (or waveform) is used for both communication and sensing in an ISAC system, the sensing performance can be improved while the communication performance is considered.

To better understand the constellation shaping methods shown in FIG. 5 and FIG. 11, the following uses a simplified flowchart for description.

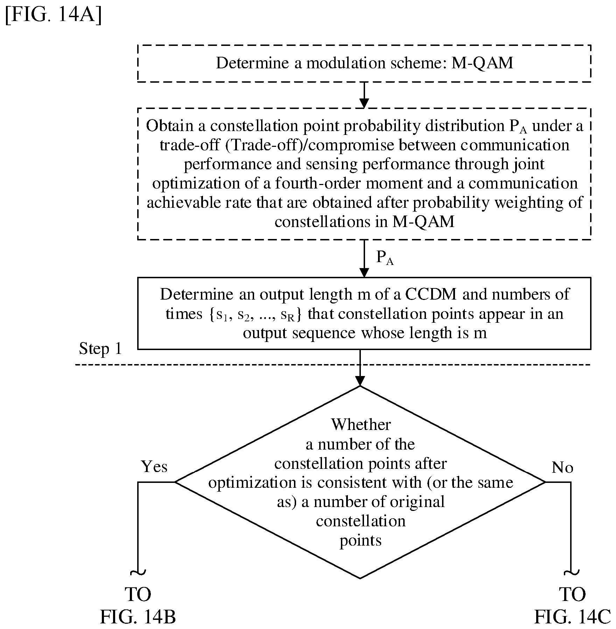

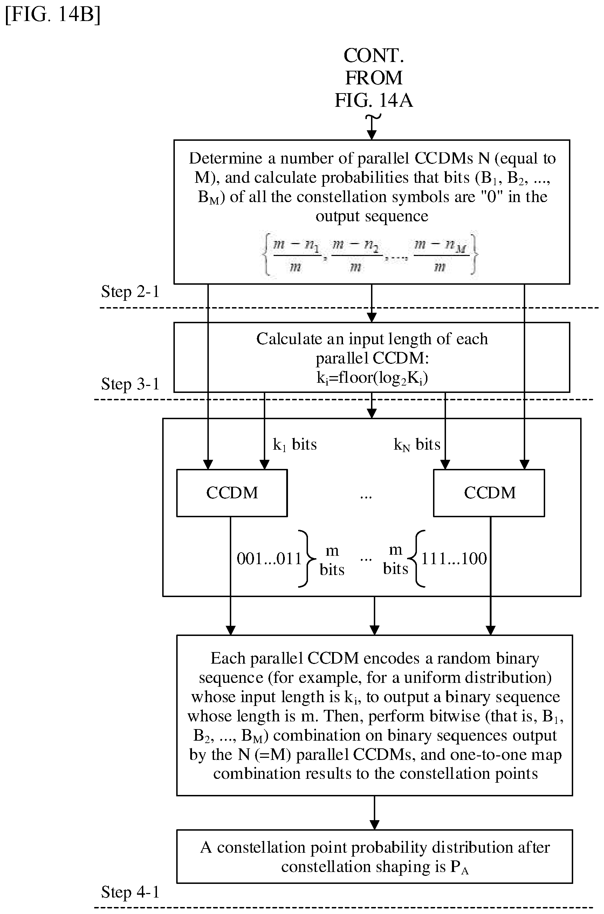

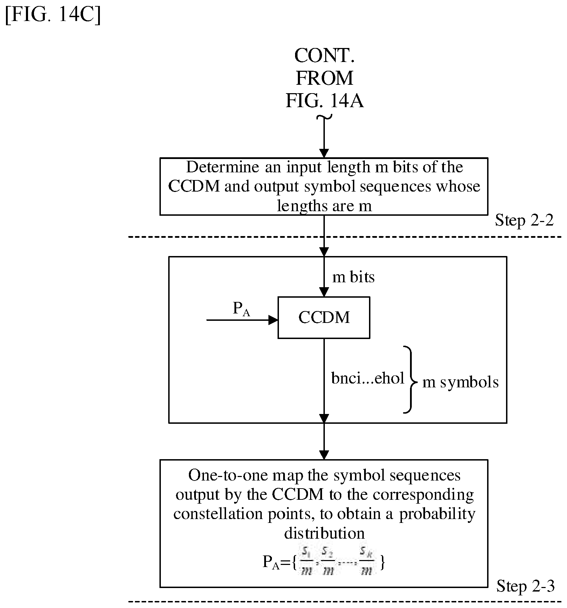

For example, FIG. 14A to FIG. 14C are a simplified schematic flowchart of a constellation shaping method according to an embodiment of this application. In FIG. 14A to FIG. 14C, step 1: Determine a modulation scheme M-QAM, obtain a constellation point probability distribution P_{A} under a trade-off (Trade-off)/compromise between communication performance and sensing performance through joint optimization of a fourth-order moment and a communication achievable rate that are obtained after probability weighting of constellations points in M-QAM, and then determine an output length m of a CCDM and numbers of times {s₁, s₂, ..., s_{R}} that constellation points appear in an output sequence whose length is m. Then, determine to perform step 2-1 or step 2-2 based on whether a number of constellation points after optimization is consistent (or the same) with a number of original constellation points.

As shown in FIG. 14A to FIG. 14C, when the number of constellation points after optimization is consistent (or the same) with the number of original constellation points, step 2-1 is performed: Determine a number of parallel CCDMs N (equal to M), and calculate probabilities $\left\{\frac{m - {n}_{1}}{m},\frac{m - {n}_{2}}{m},…,\frac{m - {n}_{M}}{m}\right\}$ that bits (B₁, B₂, ..., B_{M}) of the constellation symbols are "0" in the output sequence. Then, step 3-1 is performed: Calculate an input length of each parallel CCDM: kᵢ=floor(log₂Kᵢ), and ${K}_{i} = {C}_{m}^{\left(m-{n}_{i}\right)} \times {C}_{{n}_{i}}^{{n}_{i}}$. Finally, step 4-1 is performed: Each parallel CCDM encodes, based on results obtained in step 2-1 and step 3-1, a random binary sequence (for example, for a uniform distribution) whose input length is kᵢ, to output a binary sequence whose length is m. Then, perform bitwise (that is, B₁, B₂, ..., B_{M}) combination on binary sequences output by the N (=M) parallel CCDMs, and one-to-one map combination results to constellation points, to obtain symbol sequences that comply with the constellation point probability distribution P_{A} in step 1 in FIG. 14A to FIG. 14C. It may be understood that the symbol sequences obtained in this step (namely, step 4-1) are a constellation (waveform) after optimization. The waveform (or constellation) after optimization is used in an ISAC system, to implement both a communication function and a sensing function, thereby improving sensing performance.

As shown in FIG. 14A to FIG. 14C, when the number of constellation points after optimization is inconsistent with (or different from) the number of original constellation points, step 2-2 is performed: Determine an input length m bits and an output length m symbols of the CCDM. Then, step 2-3 is performed: The CCDM encodes a random binary sequence (for example, for a uniform distribution) based on the constellation point probability distribution P_{A} in step 1 and the input length (m bits) obtained in step 2-2, to output a symbol sequence whose length is m. Then, one-to-one map the symbol sequence output by the CCDM to corresponding constellation points, to obtain a probability distribution ${P}_{A} = \left\{\frac{{S}_{1}}{m},\frac{{S}_{2}}{m},…,\frac{{S}_{R}}{m}\right\}$.

For specific implementation of step 2-1, step 3-1, and step 4-1 in FIG. 14A to FIG. 14C, refer to related descriptions (as shown in FIG. 8) in the embodiment shown in FIG. 5. For specific implementation of step 2-2 and step 3-2 in FIG. 14A to FIG. 14C, refer to related descriptions (as shown in FIG. 12) in the embodiment shown in FIG. 11. Details are not described herein again.

It may be understood that FIG. 14A to FIG. 14C are merely a simple example for ease of understanding, and does not represent an actual execution step of constellation shaping. Constellation shaping in this embodiment of this application may include some steps in FIG. 14A to FIG. 14C.

In a possible implementation, in this embodiment of this application, constellation point probability distributions P_{A} under a trade-off (Trade-off)/compromise between communication performance and sensing performance in different modulation schemes may be obtained through advanced joint optimization of fourth-order moments of QAM signal amplitudes and communication achievable rates in different modulation schemes. In a subsequent constellation shaping process, a corresponding constellation point probability distribution P_{A} may be used based on a modulation order M of QAM, and constellation shaping may be performed without joint optimization for obtaining a constellation point probability distribution each time. In other words, in step 1 in FIG. 14A to FIG. 14C, "obtain a constellation point probability distribution P_{A} under a trade-off (Trade-off)/compromise between communication performance and sensing performance through joint optimization of a fourth-order moment and a communication achievable rate that are obtained after probability weighting of constellations points in M-QAM" may not need to be performed each time.

The foregoing content describes several possible implementations of constellation shaping. To support constellation shaping at a transmitter and constellation shaping dematching at a receiver, this application further provides a communication method, which can not only support both communication and sensing (or support integrated sensing and communication), but also improve sensing performance while communication performance is considered.

In a possible implementation, the communication method provided in embodiments of this application may be implemented separately, or may be implemented in combination with the constellation shaping method shown in FIG. 5 or FIG. 11. This is not limited in this application. In other words, the communication method provided in embodiments of this application may be applied to the constellation shaping method shown in FIG. 5 or FIG. 11, and may also be applied to another constellation shaping solution. In other words, the communication method provided in embodiments of this application may not be bound to the constellation shaping method provided in FIG. 5 and FIG. 11.

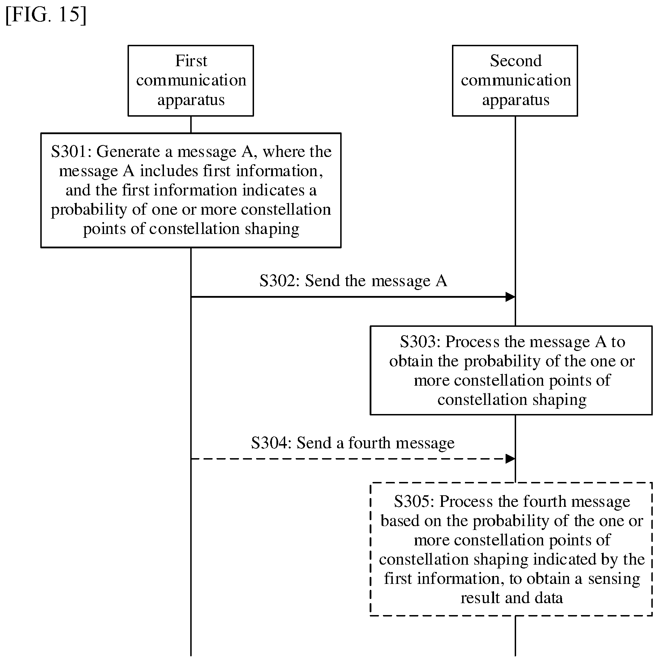

FIG. 15 is a schematic flowchart of a communication method according to an embodiment of this application. The method may be applied to a scenario in which both Wi-Fi communication and sensing are performed, or may be applied to a scenario in which both cellular communication and sensing are performed. In short, the method may be applied to an ISAC system, and may be used to support a communication apparatus in implementing a constellation shaping function. The method mainly describes aligning probabilities of one or more constellation points of constellation shaping by a first communication apparatus and a second communication apparatus through separate signaling exchange.

As shown in FIG. 15, the communication method includes but is not limited to the following steps.

S301: The first communication apparatus generates a message A, where the message A includes first information, and the first information indicates a probability of one or more constellation points of constellation shaping.

S302: The first communication apparatus sends the message A. Correspondingly, the second communication apparatus receives the message A.

S303: The second communication apparatus processes the message A to obtain the probability of one or more constellation points of constellation shaping.

In a possible implementation, the message A may be a medium access control (medium access control, MAC) frame in a Wi-Fi communication system, for example, a newly defined constellation shaping request (Constellation Shaping Request) frame or an existing sensing measurement request (Sensing Measurement Request) frame; or may be signaling in a cellular communication system, for example, a radio resource control (radio resource control, RRC) message, downlink control information (downlink control information, DCI), or uplink control information (uplink control information, UCI). The message A may include the first information, and the first information may indicate the probability of the one or more constellation points of constellation shaping (in one or more modulation schemes). For example, the plurality of constellation points of constellation shaping may belong to a same constellation diagram. For example, the probability of the one or more constellation points of constellation shaping is predefined, for example, the probability shown in Table 1, Table 2, or Table 9; or the probability of the one or more constellation points of constellation shaping is determined based on a predefined probability range, for example, the probability range shown in Table 5a, Table 5b, Table 8a, or Table 8b. Alternatively, the first information may indicate an algorithm, a formula, a parameter, or the like, where the algorithm, the formula, or the parameter may be used to determine (or calculate) the probability of the one or more constellation points of constellation shaping. The first communication apparatus generates and sends the message A, and the second communication apparatus receives the message A, and processes (for example, parses) the message A, to obtain the probability of the one or more constellation points of constellation shaping. For example, a waveform corresponding to these constellation points of constellation shaping may be used for both data transmission and sensing measurement.

A modulation scheme in embodiments of this application may include but is not limited to QAM, and QAM in this application includes two types: a uniform constellation and a non-uniform constellation (non-uniform Constellation, NUC). In this application, QAM of different modulation orders may be understood as different modulation schemes. For example, 16QAM and 64QAM may be understood as two different modulation schemes.

In a possible implementation, the message A may further include second information, and the second information may indicate one or more modulation schemes. For example, the first information may specifically indicate a probability of one or more constellation points of constellation shaping in the one or more modulation schemes. For example, it is assumed that the second information indicates a plurality of modulation schemes, the first information may indicate probabilities of one or more constellation points of constellation shaping in the plurality of modulation schemes. Alternatively, the message A includes a plurality of pieces of first information, one piece of first information may indicate a probability of one or more constellation points of constellation shaping in one modulation scheme, and the plurality of pieces of first information may indicate probabilities of one or more constellation points of constellation shaping in the plurality of modulation schemes. It may be understood that, if the message A does not include the second information, the first information may indicate a probability of one or more constellation points of constellation shaping in an agreed modulation scheme. Herein, the "agreed modulation scheme" may be predefined in a standard protocol, may be agreed on or determined through negotiation between the first communication apparatus and the second communication apparatus in advance, may be preconfigured, or the like. This is not limited in embodiments of this application.

In a possible implementation, for a modulation scheme, probabilities of constellation points of constellation shaping are equal, for example, the constellation point probability distribution P_{A} obtained in step 201 shown in FIG. 11. In this implementation, the first information may indicate a probability of one constellation point of constellation shaping (in one or more modulation schemes), or may indicate probabilities of a plurality of constellation points (the plurality of constellation points have equal probabilities, and the plurality of constellation points belong to a same constellation diagram) of constellation shaping (in one or more modulation schemes). This is not limited in embodiments of this application. In another possible implementation, for a modulation scheme, there are constellation points with unequal probabilities in constellation points of constellation shaping, or probabilities of at least two constellation points of constellation shaping are unequal, for example, the constellation point probability distribution P_{A} obtained in step 101 shown in FIG. 5. In this implementation, the first information may indicate probabilities of a plurality of constellation points (the plurality of constellation points belong to a same constellation diagram) of constellation shaping (in one or more modulation schemes).

In a possible implementation, the message A may be used to request to enable a constellation shaping function. In another possible implementation, before the first communication apparatus sends the message A, the first communication apparatus sends a message B, or the first communication apparatus receives a message B from the second communication apparatus, where the message B may be used to request to enable a constellation shaping function. For example, the message B may be a frame in the Wi-Fi communication system, or signaling (for example, an RRC message) in the cellular communication system. This is not limited in embodiments of this application.

In a possible implementation, when the message A is used to request to enable the constellation shaping function, after receiving the message A, the second communication apparatus may send a message C (namely, a second message) to the first communication apparatus. The message C may include sixth information, where the sixth information may indicate whether the second communication apparatus agrees to enable the constellation shaping function. Certainly, when the message A is used to request to enable the constellation shaping function, after receiving the message A, the second communication apparatus may not reply with a message indicating whether to agree to enable the constellation shaping function, but agrees by default to enable the constellation shaping function. It may be understood that this embodiment of this application mainly focuses on a case in which the constellation shaping function is agreed to be enabled.

In another possible implementation, when the first communication apparatus sends the message B to request to enable the constellation shaping function, after receiving the message B, the second communication apparatus may send a message C (namely, a second message) to the first communication apparatus. The message C may include sixth information, where the sixth information may indicate whether the second communication apparatus agrees to enable the constellation shaping function. Certainly, after receiving the message B, the second communication apparatus may not reply with the message C, but agrees by default to enable the constellation shaping function. Alternatively, when the second communication apparatus sends the message B to request to enable the constellation shaping function, after receiving the message B, the first communication apparatus may return the message A to the second communication apparatus, to implicitly or explicitly indicate that the constellation shaping function is agreed to be enabled. Certainly, the first communication apparatus may further return another message to the second communication apparatus, to indicate that the constellation shaping function is agreed to be enabled; and then send the message A to the second communication apparatus.

"Enabling the constellation shaping function" described in embodiments of this application may be understood as adding a constellation shaping phase at a transmitter of a communication system (for example, the cellular communication system or the Wi-Fi communication system), as shown in FIG. 4a, and adding a constellation shaping dematching phase at a receiver of the communication system, as shown in FIG. 4b. Correspondingly, "disabling the constellation shaping function" described in embodiments of this application may be understood as disabling the constellation shaping phase at the transmitter of the communication system (for example, the cellular communication system or the Wi-Fi communication system), and disabling the constellation shaping dematching phase at the receiver of the communication system.

In a possible implementation, the message A may further include one or more of the following: third information, fourth information, or fifth information. The third information may indicate to enable the constellation shaping function. The fourth information may indicate duration of enabling the constellation shaping function. The fifth information may indicate a number of physical layer protocol data units (physical layer protocol data unit, PPDU) using the constellation shaping function. In another possible implementation, the message A includes the first information, and optionally includes the second information. The message B may include one or more of the following: third information, fourth information, or fifth information. Whether the second information, the third information, the fourth information, and the fifth information are specifically carried in the message A or the message B is not limited in embodiments of this application.

In a possible implementation, the message A (or the message B) may not include the fourth information and/or the fifth information, but duration (for example, 100 milliseconds, 1 second, or 5 minutes) of the constellation shaping function is predefined, and/or the number of PPDUs using the constellation shaping function is predefined. In another possible implementation, the first communication apparatus and/or the second communication apparatus may also disable the constellation shaping function based on a message D (namely, a third message), so that the duration of the constellation shaping function and the number of PPDUs using the constellation shaping function may not be limited. For example, after a sensing task is completed based on communication data or when the communication apparatus needs to ensure a communication service with a higher priority, the first communication apparatus or the second communication apparatus may send the message D, where the message D may be used to disable the constellation shaping function. An occasion/scenario of sending the message D is not limited in embodiments of this application. This is merely an example herein. The first communication apparatus or the second communication apparatus may determine, based on an internal policy of the first communication apparatus or the second communication apparatus, the occasion of sending the message D.

Certainly, when the message A (or the message B) includes the fourth information and/or the fifth information, the constellation shaping function may also be disabled (in advance) based on the message D. Similarly, when the duration of the constellation shaping function is predefined and/or the number of PPDUs using the constellation shaping function is predefined, the constellation shaping function may also be disabled (in advance) based on the message D. This is not limited in embodiments of this application.

In still another possible implementation, when the message A (or the message B) does not include the fourth information and the fifth information, whether constellation shaping is performed on this message (namely, a fourth message) may also be indicated by carrying indication information in the subsequently sent message (namely, the fourth message). Alternatively, whether constellation shaping is performed on this message (namely, a fourth message) may be determined based on whether a modulation scheme used for the subsequently sent message (namely, the fourth message) is QAM (namely, a first modulation scheme). For example, the message A is a frame in the Wi-Fi communication system. After the second communication apparatus receives the message A, the first communication apparatus or the second communication apparatus may send a PPDU, and may include the indication information in a physical layer (physical layer, PHY) header (PHY Header) of the PPDU, to indicate whether constellation shaping is performed on the PPDU (or a physical layer payload (PHY payload) of the PPDU). Alternatively, whether constellation shaping is performed on the PPDU (or the PHY payload of the PPDU) may be determined based on a modulation and coding scheme (modulation and coding scheme, MCS) carried in the PPDU. For example, when a modulation scheme indicated by the MCS carried in the PPDU is the first modulation scheme (for example, QAM), it indicates that constellation shaping is performed on the PPDU (or the PHY payload of the PPDU). It may be understood that, in this implementation, the constellation shaping function may still be disabled based on the message D (namely, the third message). Certainly, an operation of disabling the constellation shaping function may not be required. This is not limited in embodiments of this application.

The following uses examples to describe implementations of some or all of the messages (for example, the message A, the message B, the message C, or the message D) in different communication systems (for example, the Wi-Fi communication system and the cellular communication system).

Implementation 1: Some or all of the messages are frames in the Wi-Fi communication system.

Implementation 1.1: The message A may be a newly defined frame, for example, a constellation shaping request (Constellation Shaping Request) frame, and may be used to request or indicate to enable the constellation shaping function. Certainly, the newly defined frame may also have another name, for example, a probability shaping frame or a constellation probability indication frame. A name of the newly defined frame is not limited in embodiments of this application.

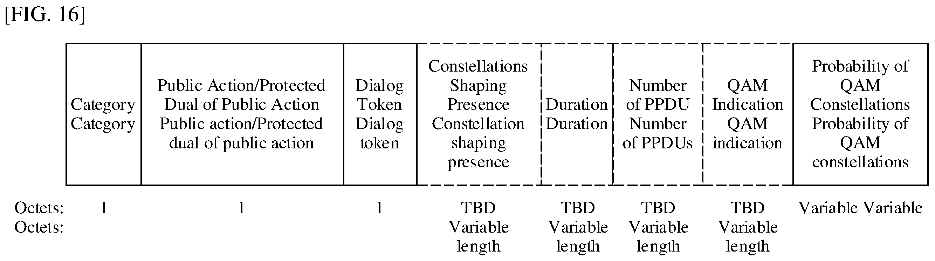

For example, FIG. 16 is a diagram of a frame format of a constellation shaping request frame according to an embodiment of this application. As shown in FIG. 16, a constellation shaping request frame function field (Constellations Shaping Request Frame Function field) may include but is not limited to a probability of QAM constellations (Probability of QAM Constellations) field (that is, the first information). Optionally, the constellation shaping request frame function field further includes but is not limited to one or more of the following: a QAM indication (QAM Indication) field (that is, the second information), a constellation shaping presence (Constellations Shaping Presence) field (that is, the third information), a duration (Duration) field (that is, the fourth information), or a number of PPDUs (Number of PPDU) field (that is, the fifth information). The constellation shaping presence field may indicate whether to enable the constellation shaping function. For example, when the constellation shaping presence field is a first value, it indicates to enable the constellation shaping function; or when the constellation shaping presence field is a second value, it indicates reserved. It may be understood that, when the constellation shaping request frame includes the constellation shaping presence field, the constellation shaping presence field in this embodiment of this application is the first value. It indicates to enable the constellation shaping function. The duration field (that is, the fourth information) may indicate the duration of enabling the constellation shaping function. It may be understood that the constellation shaping function may be automatically disabled after the duration expires. The number of PPDUs field (that is, the fifth information) may indicate a number of PPDUs using the constellation shaping function subsequently. It may be understood that, after the same number of PPDUs are sent, the constellation shaping function may be automatically disabled. The QAM indication field (that is, the second information) may indicate a QAM modulation order (or a modulation scheme) used for a PPDU subsequently, or may indicate one or more modulation orders (or one or more modulation schemes). The modulation order (or modulation scheme) indicated by the QAM indication field corresponds to the subsequent probability of QAM constellations field.

The probability of QAM constellations field (that is, the first information) may indicate a probability of one or more constellation points of constellation shaping (in one or more modulation schemes). For example, the plurality of constellation points belong to a same constellation diagram. For example, a number of probability of QAM constellations fields in the constellation shaping request frame is the same as the modulation order indicated by the QAM indication field. One probability of QAM constellations field may indicate a probability of one or more constellation points of constellation shaping in one modulation scheme. Certainly, one probability of QAM constellations field may also indicate probabilities of one or more constellation points of constellation shaping in a plurality of modulation schemes. In this case, the number of probability of QAM constellations fields in the constellation shaping request frame is different from the modulation order indicated by the QAM indication field. For example, probabilities of a plurality of constellation points (as shown in Table 1, Table 2, or Table 9) may be arranged in the probability of QAM constellations field according to a specific rule. These probabilities one-to-one correspond to the constellation points of constellation shaping, to represent a probability of each constellation point of constellation shaping. In other words, (one or more) probability values may be carried in the probability of QAM constellations field to represent the probability of each constellation point of constellation shaping.

In a possible implementation, QAM of different modulation orders and constellation point probabilities of constellation shaping corresponding to QAM may be standardized, and QAM of each modulation order and constellation point probability distribution corresponding to QAM of each modulation order may be represented by an index (index). During exchange, a modulation order (or a modulation scheme) and a probability of one or more constellation points of constellation shaping may be indicated by transmitting an index. For example, it is assumed that Table 1 corresponds to one index (for example, an index 1). It indicates one constellation point probability distribution in 16QAM. It is assumed that Table 2 corresponds to another index (for example, an index 2). It indicates one constellation point probability distribution in 64QAM. It is assumed that Table 9 corresponds to still another index (for example, an index 3). It indicates another constellation point probability distribution in 16QAM. In other words, when an index value is unique, the probability of QAM constellations field (that is, the first information) may indicate a modulation scheme and a probability of one or more constellation points of constellation shaping in the modulation scheme based on the index value. In other words, when the index value is unique, the probability of QAM constellations field (that is, the first information) may include a constellation shaping mode index, and one constellation shaping mode index corresponds to one modulation scheme and probabilities of a group of constellation points of constellation shaping in the modulation scheme.

For another example, it is assumed that there are three types of constellation point probability distributions in 16QAM. Indexes of the three types of constellation point probability distributions are respectively an index 1 to an index 3. It is assumed that there are four types of constellation point probability distributions in 64QAM. Indexes of the four types of constellation point probability distributions are respectively an index 1 to an index 4. In other words, when an index value is not unique, a probability of one or more constellation points of constellation shaping may be determined based on a combination of a modulation order and the index value. For example, the probability of QAM constellations field (that is, the first information) may include a constellation shaping mode index, and the QAM indication field (that is, the second information) indicates a modulation order (or a modulation scheme). The probability of the one or more constellation points of constellation shaping may be determined based on the probability of QAM constellations field (that is, the first information) and the QAM indication field (that is, the second information). It may be understood that one constellation shaping mode index corresponds to probabilities of one or more groups of constellation points of constellation shaping (in one modulation scheme). For another example, when an index value is not unique, the QAM indication field may not exist in the constellation shaping request frame, and the probability of QAM constellations field may include a constellation shaping mode index and a modulation order (or a modulation scheme). For example, the first n (n is a positive integer) bits of the probability of QAM constellations field indicate a modulation order (or a modulation scheme), and a part or all of the remaining bits indicate the index value. In other words, the probability of QAM constellations field (that is, the first information) may indicate both the modulation order (or the modulation scheme) and a probability of one or more constellation points of constellation shaping in the modulation order (or the modulation scheme).

In this embodiment of this application, QAM of the different modulation orders and constellation point probability distributions corresponding to QAM are standardized. When constellation shaping in one or more modulation schemes needs to be used, signaling overheads (or a number of bits required by the probability of QAM constellations field (that is, the first information)) can be reduced through index exchange.

It may be understood that lengths, names, and/or an arrangement order of the fields in FIG. 16 are/is merely an example. This is not limited in embodiments of this application. A specific manner of indicating the fields is not limited in embodiments of this application, and any manner that can indicate corresponding information falls within the protection scope of embodiments of this application.

In a possible implementation, after receiving the constellation shaping request frame, the second communication apparatus may reply with a newly defined frame, for example, a constellation shaping response (Constellations Shaping Response) frame, to indicate whether a device (the second communication apparatus herein) that receives the constellation shaping request frame agrees to use/enable the constellation shaping function. In other words, the message C may also be a newly defined frame, for example, a constellation shaping response frame. Certainly, the newly defined frame may also have another name, for example, a probability shaping response frame or a probability response frame. A name of the newly defined frame is not limited in embodiments of this application.

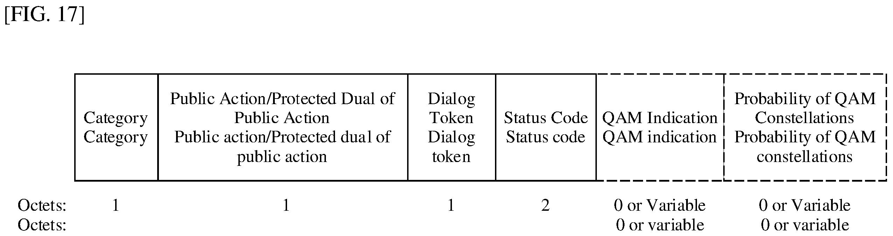

For example, FIG. 17 is a diagram of a frame format of a constellation shaping response frame according to an embodiment of this application. As shown in FIG. 17, a constellation shaping response frame function field (Constellations Shaping Response Action field) may include but is not limited to a status code (Status Code) field (that is, the sixth information). Optionally, the constellation shaping response frame function field further includes but is not limited to one or more of the following: a QAM indication (QAM Indication) field or a probability of QAM constellations (Probability of QAM Constellations) field. The status code field (that is, the sixth information) may indicate whether a receiver of the constellation shaping request frame agrees to use/enable the constellation shaping function. For example, when the status code field is a first value, it indicates that the constellation shaping function is agreed to be used/enabled; or when the status code field is a second value, it indicates that the constellation shaping function is refused to be used/enabled. For example, the first value and the second value may be set based on an actual situation. This is not limited in embodiments of this application.

In a possible implementation, when the status code field indicates that the constellation shaping function is refused to be used/enabled, the QAM indication field may be carried in the constellation shaping response frame, to indicate a recommended/supported modulation order (or modulation scheme); and/or the probability of QAM constellations field is carried in the constellation shaping response frame, to indicate a recommended/supported probability of one or more constellation points of constellation shaping. Certainly, when the status code field indicates that the constellation shaping function is agreed to be used/enabled, the QAM indication field and/or the probability of QAM constellations field may also be carried in the constellation shaping response frame. In this case, the QAM indication field in the constellation shaping response frame may be a replication of the QAM indication field in the constellation shaping request frame; and the probability of QAM constellations field in the constellation shaping response frame may be a replication of the probability of QAM constellations field in the constellation shaping request frame.

For meanings and possible implementations of the QAM indication field and the probability of QAM constellations field, refer to the related descriptions in FIG. 16. Details are not described herein again.

It may be understood that lengths, names, and/or an arrangement order of the fields in FIG. 17 are/is merely an example. This is not limited in embodiments of this application. A specific manner of indicating the fields is not limited in embodiments of this application, and any manner that can indicate corresponding information falls within the protection scope of embodiments of this application.

In a possible implementation, the constellation shaping function is enabled through constellation shaping request frame exchange. After the constellation shaping function is enabled, when a modulation scheme used for the PPDU (that is, the fourth message) sent by the first communication apparatus or the second communication apparatus is the first modulation scheme (for example, QAM), it indicates that constellation shaping is used for (or performed on) the PPDU. Correspondingly, a side that receives the PPDU needs to use constellation shaping dematching for decoding. It may be understood that the modulation scheme used for the PPDU may be determined by based on the MCS in the physical layer header (PHY header) of the PPDU. Details are not described below. For example, the PPDU (that is, the fourth message) sent by the first communication apparatus or the second communication apparatus herein may be used for both communication data transmission and sensing measurement. It may be understood that the PPDU participates in both conventional communication processing and sensing processing.

In another possible implementation, after the constellation shaping function is enabled, whether constellation shaping is performed on the PPDU (that is, the fourth message) may be indicated by carrying the indication information in the PPDU (that is, the fourth message) sent by the first communication apparatus or the second communication apparatus. For example, the indication information may be in the physical layer header (PHY header) of the PPDU. For example, the indication information may be in a universal signal (universal signal, U-SIG) field of the PHY header, or may be in a high efficiency signal A/high efficiency signal B (high efficient signal A/ high efficient signal B, HE-SIG-A/HE-SIG-B) field, or an extremely high throughput signal (extremely high throughput signal, EHT-SIG) field, or a future ultra high reliability signal (ultra high reliability signal, UHR-SIG) field. For example, the indication information may be 1 bit (bit). When the bit is 1, it indicates that constellation shaping is performed on the PPDU. When the bit is 0, it indicates that constellation shaping is not performed on the PPDU. It may be understood that, when the bit is 1 or 0, it indicates that constellation shaping is performed on the PPDU. This is not limited in embodiments of this application. Correspondingly, after receiving the PPDU, the side that receives the PPDU may learn, based on the indication information in the PHY header, whether constellation shaping is performed on the PPDU. If constellation shaping is performed on the PPDU, constellation shaping dematching may be used for decoding.

In a possible implementation, the first communication apparatus or the second communication apparatus may further disable the constellation shaping function based on a newly defined frame, for example, a constellation shaping termination (Constellations Shaping Termination) frame. In other words, the message D may also be a newly defined frame, for example, a constellation shaping termination frame. Certainly, the newly defined frame may also have another name, for example, a probability shaping termination frame or a probability termination frame. A name of the newly defined frame is not limited in embodiments of this application. It may be understood that each of the first communication apparatus and the second communication apparatus may actively send the constellation shaping termination frame to disable the constellation shaping function. Who disables the constellation shaping function is not limited in embodiments of this application.

In this embodiment of this application, related information (for example, enabling, disabling, the probability of constellation shaping, the modulation scheme, and the duration) of constellation shaping is exchanged based on a newly defined frame. A meaning of the newly defined frame is clear and is not easily confused.

Implementation 1.2: The message A may reuse a frame in a sensing protocol, for example, a sensing measurement request (Sensing Measurement Request) frame. The sensing measurement request frame may carry the first information (for example, the probability of QAM constellations field), and optionally further carry one or more of the following: the second information (for example, the QAM indication field), the third information (for example, the constellation shaping presence field), the fourth information (for example, the duration field), or the fifth information (for example, the number of PPDUs field). A specific carrying manner is not limited in embodiments of this application. For example, the information (for example, the first information, the second information, the third information, the fourth information, or the fifth information) may be carried in the sensing measurement request frame in a form of one (sub)element, or may be carried in the sensing measurement request frame in another form. It may be understood that the sensing measurement request frame carrying the information may also be referred to as an "improved sensing measurement request frame" or the like. This is not limited in embodiments of this application.

In a possible implementation, when the sensing measurement request frame carries the first information (or a (sub)element, where the (sub)element includes the first information, the second information, the third information, the fourth information, or the fifth information), it indicates that the sensing measurement request frame requests to enable the constellation shaping function in addition to an original function of negotiating a sensing-related operation parameter (for example, a measurement session identifier (measurement session ID, MSID)). In another possible implementation, the sensing measurement request frame includes the third information, and the third information indicates to enable the constellation shaping function. In still another possible implementation, a new frame may be defined to request to enable the constellation shaping function. The newly defined frame may be sent before the sensing measurement request frame is sent. In other words, the message B may be the newly defined frame. An implementation of the newly defined frame is not limited in embodiments of this application.

In a possible implementation, the message C may also reuse a frame in the sensing protocol, for example, a sensing measurement response (Sensing Measurement Response) frame. The sensing measurement response frame may include the sixth information (for example, the status code field), to indicate whether a receiver of the sensing measurement request frame agrees to enable/use the constellation shaping function. It may be understood that the sensing measurement response frame carrying the sixth information may also be referred to as an "improved sensing measurement response frame" or the like. This is not limited in embodiments of this application.

In a possible implementation, a session mechanism may be set, and constellation shaping is used for all PPDUs in this session. With reference to an existing sensing procedure, a constellation shaping session may be set in an identifier (identifier, ID) manner. Constellation shaping is performed on the PPDU in the session, constellation shaping does not need to be performed on a PPDU outside the session, and communication is performed in a conventional manner. For example, the constellation shaping function is enabled based on the sensing measurement request frame and the sensing measurement response frame. After the constellation shaping function is enabled, the constellation shaping function may be used for all PPDUs (the PPDUs may include data) in a session (for example, a session corresponding to the MSID). In other words, after the constellation shaping function is enabled, constellation shaping is used for some PPDUs sent through an air interface.

In a possible implementation, after the constellation shaping function is enabled, when a modulation scheme used for a PPDU (that is, the fourth message) sent by the first communication apparatus or the second communication apparatus in the constellation shaping session is the first modulation scheme (for example, QAM), it indicates that constellation shaping is used for (or performed on) the PPDU. Correspondingly, a side that receives the PPDU needs to use constellation shaping dematching for decoding.

In another possible implementation, after the constellation shaping function is enabled, whether constellation shaping is performed on the PPDU (that is, the fourth message) may be indicated by carrying the indication information in the PPDU (that is, the fourth message) sent in the constellation shaping session. For a specific implementation of the indication information, refer to the foregoing description. Details are not described herein again.

In a possible implementation, the message D may also reuse a frame in the sensing protocol, for example, a sensing measurement session termination (Sensing Measurement Session Termination) frame, to disable the constellation shaping function. In other words, the sensing measurement session termination frame may not only be used to disable a sensing measurement session corresponding to an MSID, but also be used to disable a constellation shaping function (in a constellation shaping session).

In this embodiment of this application, related information (for example, enabling, disabling, the probability of constellation shaping, the modulation scheme, and the duration) of constellation shaping is exchanged by reusing a frame in an existing sensing protocol. This can reduce signaling overheads, slightly change a standard, and reduce implementation workload.

Implementation 2: Some or all of the messages are signaling in the cellular communication system.

In a possible implementation, the message A may be a radio resource control (radio resource control, RRC) message, and the RRC message may indicate whether to enable the constellation shaping function for a reference signal, a control channel, a data channel, or the like transmitted on a specific resource. If the RRC message indicates that the constellation shaping function is enabled for the reference signal, the control channel, the data channel, or the like transmitted on the specific resource, the RRC message may carry the first information (indicating the probability of the one or more constellation points of constellation shaping), and optionally carry one or more of the following: the second information (indicating the one or more modulation schemes), the third information (indicating to enable the constellation shaping function), or the fourth information (indicating the duration of enabling the constellation shaping function). This embodiment of this application mainly focuses on a case in which the constellation shaping function is enabled. The "specific resource" may be indicated via a time-frequency location and/or an antenna port. For example, the first information in the RRC message may be implemented by an index. As described above, QAM of each modulation order and a constellation point probability distribution corresponding to QAM may be represented by an index (index). For another example, the first information in the RRC message may also be implemented by a table (that is, a specific probability value), for example, Table 1, Table 2, or Table 9. This is not limited in embodiments of this application.

For example, a manner of transferring related information (for example, the first information and the second information) of constellation shaping in the RRC message includes: The related information of constellation shaping is represented in the RRC message in a form of a parameter set, where each parameter set defines a group of parameter configurations. For example, the RRC message carries a plurality of parameter sets, and one parameter set defines one modulation scheme and a probability of one or more constellation points of constellation shaping in the modulation scheme. Optionally, the parameter set further defines one or more of the following: the duration of constellation shaping, the corresponding specific resource (for example, the time-frequency location and/or the antenna port), and an applicable object (for example, the reference signal, the control channel, or the data channel) of constellation shaping. Then, downlink control information (downlink control information, DCI) or uplink control information (uplink control information, UCI) indicates that a parameter set is used for a reference signal, a control channel, or a data channel transmitted on a specific resource. For example, the parameter set may be indicated in an index manner.

In another possible implementation, the message A may be DCI or UCI. A parameter set and a parameter configuration may be built in a device or pre-agreed on. Then, the DCI or the UCI indicates that a parameter set is used for a reference signal, a control channel, or a data channel transmitted on a specific resource. For example, the parameter set may be indicated in an index manner. Each parameter set defines a group of parameter configurations. For example, one parameter set defines one modulation scheme and a probability of one or more constellation points of constellation shaping in the modulation scheme. Optionally, the parameter set further defines one or more of the following: duration of constellation shaping, a corresponding specific resource (for example, a time-frequency location and/or an antenna port), and an applicable object (for example, a reference signal, a control channel, or a data channel) of constellation shaping. It may be understood that, if the DCI or the UCI carries an index of the parameter set, it indicates to enable the constellation shaping function. Alternatively, before the DCI or the UCI is sent, an RRC message indicates to enable the constellation shaping function. In other words, the message B may be an RRC message, and indicates to enable the constellation shaping function.

In an optional embodiment, the first information may not indicate the probability of the one or more constellation points of constellation shaping, and may indicate a value (for example, a trade-off value). The first communication apparatus and the second communication apparatus may deduce, based on the value and the QAM modulation order used for the current PPDU, a probability of a constellation point of constellation shaping at the QAM modulation order, to complete communication and sensing. It may be understood that, during PPDU transmission, QAM modulation orders used for PPDUs may be different based on different channel conditions. Therefore, a same QAM modulation order and a constellation point probability corresponding to QAM cannot be potentially used for a plurality of PPDUs in a period of time (for example, within sensing measurement session duration or a sensing time). Therefore, in this embodiment of this application, a value point is given, and a probability of a constellation point of constellation shaping may be reversely deduced with reference to different QAM. For example, the value may be a normalized side lobe value in a case of a fixed subcarrier and a fixed symbol length. When a number of subcarriers and the symbol length are fixed, upper and lower limits of a side lobe are given, and a probability at a corresponding QAM modulation order may be reversely deduced based on a corresponding normalized side lobe value.

In a possible implementation, the foregoing content describes signaling exchange before constellation shaping, and the following describes a procedure of performing communication and sensing based on the signaling. After step S303, the communication method shown in FIG. 15 further includes one or more of the following steps.

S304: The first communication apparatus sends the fourth message. Correspondingly, the second communication apparatus receives the fourth message.

S305: The second communication apparatus processes the fourth message based on the probability of the one or more constellation points of constellation shaping indicated by the first information, to obtain a sensing result and data.

It may be understood that, for ease of description, in this embodiment of this application, an example in which the first communication apparatus sends the fourth message is used. However, in actual application, the second communication apparatus may send the fourth message, and correspondingly, the first communication apparatus receives the fourth message and processes the fourth message, to obtain the sensing result and the data. It may be further understood that, regardless of whether the first communication apparatus sends the fourth message or the second communication apparatus sends the fourth message, processing processes are the same. The following uses an example in which the first communication apparatus sends the fourth message for description.

In a possible implementation, in the Wi-Fi communication system, the fourth message may be a PPDU, and the PPDU may include a physical layer payload (PHY payload). For example, before the constellation shaping function is disabled, the first communication apparatus sends a PPDU (which is referred to as the fourth message). When a modulation scheme used for the PPDU is the first modulation scheme (for example, QAM), it indicates that constellation shaping is performed on the PPDU. For example, a physical layer header (PHY header) of the PPDU includes an MCS. When the MCS indicates the first modulation scheme (for example, QAM), it indicates that constellation shaping is performed on the PPDU. In this case, the physical layer payload of the PPDU includes a modulation symbol obtained by performing constellation shaping on a (binary) bitstream based on probabilities of a plurality of constellation points in the first modulation scheme. For another example, before the constellation shaping function is disabled, the PPDU may include indication information, to indicate whether constellation shaping is performed on the PPDU. For example, the indication information is in the physical layer header of the PPDU, and the indication information indicates that constellation shaping is performed on the PPDU. In this case, if a used modulation scheme indicated by the MCS of the PPDU is the first modulation scheme, the physical layer payload of the PPDU includes a modulation symbol obtained by performing constellation shaping on a (binary) bitstream based on probabilities of a plurality of constellation points in the first modulation scheme.

In another possible implementation, in the cellular communication system, the fourth message may be one or more of a reference signal, a control channel, or a data channel. For example, the fourth message is the reference signal. The first communication apparatus sends the reference signal on the specific resource. It indicates that constellation shaping is performed on the reference signal. If a modulation scheme of the reference signal is the first modulation scheme (for example, QAM), the reference signal may include a modulation symbol obtained by performing constellation shaping on a (binary) bitstream based on probabilities of a plurality of constellation points in the first modulation scheme. If the first communication apparatus sends the reference signal on a resource other than the specific resource, it indicates that constellation shaping is performed on the reference signal.

In a possible implementation, for specific implementation of constellation shaping, refer to the descriptions of the embodiment shown in FIG. 5 or FIG. 11. Details are not described herein again.

In a possible implementation, after receiving the fourth message, the second communication apparatus may remove a guard interval (GI) from the fourth message, perform serial-to-parallel conversion, restore a received modulation symbol sequence from the received fourth message through a DFT operation, and then obtain a sensing result based on the modulation symbol sequence. In addition, the second communication apparatus may further perform constellation shaping dematching on the modulation symbol sequence based on the probability of the one or more constellation points of constellation shaping used by the first communication apparatus, to obtain communication data. It may be understood that constellation shaping dematching is an inverse process of constellation shaping. Details are not described herein. If the first information in the message A indicates only a probability of one or more constellation points of constellation shaping in one modulation scheme, the "probability of the one or more constellation points of constellation shaping used by the first communication apparatus" may be the probability of the one or more constellation points indicated by the first information. If the first information in the message A indicates probabilities of one or more constellation points of constellation shaping in a plurality of modulation schemes, the "probability of the one or more constellation points of constellation shaping used by the first communication apparatus" may be determined based on the first information and the modulation scheme used for the fourth message. For example, the first communication apparatus selects a modulation scheme and a probability of one or more constellation points of constellation shaping in the modulation scheme based on a current channel environment. Because the fourth message carries information (for example, an MCS) indicating a modulation scheme, the second communication apparatus may determine, based on the modulation scheme indicated by the MCS, from the probabilities of the one or more constellation points of constellation shaping in the plurality of modulation schemes indicated by the first information, the probability of the one or more constellation points of constellation shaping used by the first communication apparatus, to complete constellation shaping dematching.

In this embodiment of this application, the probabilities of the constellation points of constellation shaping are aligned based on the message A. This can support both communication and sensing, thereby laying a foundation for integrated sensing and communication, and can also improve sensing performance while communication performance is considered.

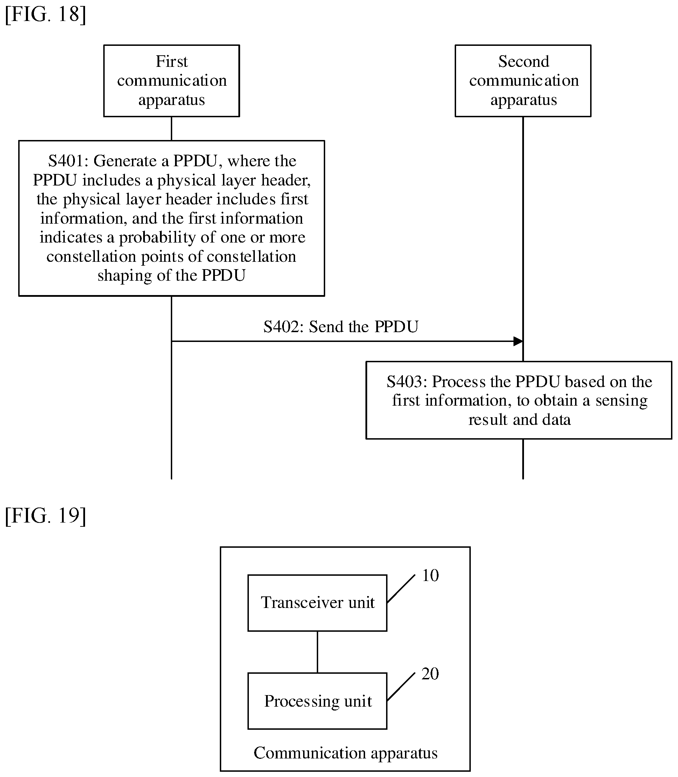

FIG. 18 is another schematic flowchart of a communication method according to an embodiment of this application. The method may be applied to a scenario in which both Wi-Fi communication and sensing are performed. The method mainly describes aligning probabilities of one or more constellation points of constellation shaping by a first communication apparatus and a second communication apparatus via a physical layer header (PHY header) of a communication-sensing PPDU.

As shown in FIG. 18, the communication method includes but is not limited to the following steps.

S401: The first communication apparatus generates a PPDU, where the PPDU includes a physical layer header, the physical layer header includes first information, and the first information indicates a probability of one or more constellation points of constellation shaping of the PPDU.

S402: The first communication apparatus sends the PPDU. Correspondingly, the second communication apparatus receives the PPDU.

S403: The second communication apparatus processes the PPDU based on the first information, to obtain a sensing result and data.

In a possible implementation, the first communication apparatus generates and sends the PPDU that is used for both communication and sensing (communication-sensing PPDU for short). Correspondingly, the second communication apparatus receives the PPDU. The PPDU may include the physical layer header (PHY Header), and the physical layer header includes the first information. The first information may indicate a probability of one or more constellation points of constellation shaping of the PPDU. For example, the probability of the one or more constellation points of constellation shaping is predefined, for example, the probability shown in Table 1, Table 2, or Table 9; or the probability of the one or more constellation points of constellation shaping is determined based on a predefined probability range, for example, the probability range shown in Table 5a, Table 5b, Table 8a, or Table 8b. Alternatively, the first information may indicate an algorithm, a formula, a parameter, or the like, where the algorithm, the formula, or the parameter may be used to determine (or calculate) the probability of the one or more constellation points of constellation shaping of the PPDU. The PPDU may be used for both data transmission and sensing measurement.

In a possible implementation, for a modulation scheme, probabilities of constellation points of constellation shaping are equal, for example, the constellation point probability distribution P_{A} obtained in step 201 shown in FIG. 11. In this implementation, the first information may indicate a probability of one constellation point of constellation shaping of the PPDU, or may indicate probabilities of a plurality of constellation points of constellation shaping of the PPDU (the probabilities of the plurality of constellation points are equal). This is not limited in embodiments of this application. In another possible implementation, for a modulation scheme, there are constellation points with unequal probabilities in constellation points of constellation shaping, or probabilities of at least two constellation points of constellation shaping are unequal, for example, the constellation point probability distribution P_{A} obtained in step 101 shown in FIG. 5. In this implementation, the first information may indicate probabilities of a plurality of constellation points of constellation shaping of the PPDU.

In a possible implementation, if different MCSs (different modulation schemes in the MCSs are mainly considered) are used on different spatial streams (spatial stream), different constellation point probability distributions for constellation shaping may also be used for the different spatial streams. Therefore, the first information may indicate a probability of one or more constellation points of constellation shaping of the PPDU on each spatial stream. For example, the first information may be carried in various SIG fields of the PHY header, for example, a U-SIG field, an HE-SIG-A/HE-SIG-B field, an EHT-SIG field, or a future UHR-SIG field.

In a possible implementation, if different MCSs (different modulation schemes in the MCSs are mainly considered) are used on different resource units (resource unit, RU), different constellation point probability distributions for constellation shaping may also be used for the different RUs. Therefore, the first information may indicate a probability of one or more constellation points of constellation shaping of the PPDU on each RU. For example, the first information may be carried in various SIG fields of the PHY header, for example, a U-SIG field, an HE-SIG-A/HE-SIG-B field, an EHT-SIG field, or a future UHR-SIG field.

In a possible implementation, QAM of different modulation orders and constellation point probabilities of constellation shaping corresponding to QAM may be standardized, and QAM of each modulation order and constellation point probability distribution corresponding to QAM of each modulation order may be represented by an index (index). During exchange, a probability of one or more constellation points of constellation shaping may be indicated by transmitting an index. For example, when an index value is unique, in other words, one index value corresponds to probabilities of a group of constellation points of constellation shaping, the first information may include one constellation shaping mode index, and the constellation shaping mode index corresponds to one modulation scheme and probabilities of a group of constellation points of constellation shaping in the modulation scheme. For another example, when an index value is not unique, in other words, one index value corresponds to probabilities of one or more groups of constellation points of constellation shaping. The probability of the one or more constellation points of constellation shaping of the PPDU may be determined based on a combination of a modulation order (or a modulation scheme) and the index value. For example, the first information may include a constellation shaping mode index, and probabilities of a group of constellation points of constellation shaping of the PPDU may be determined based on a combination of the constellation shaping mode index and a modulation scheme used for the PPDU.

In a possible implementation, the PPDU is a PPDU of a single user (single user, SU). For example, the first information (for example, an index value) may be in any one of the following fields of the PHY header: a U-SIG field, an HE-SIG-A/HE-SIG-B field, an EHT-SIG field, or a future UHR-SIG field. Certainly, the first information may alternatively be in another field of the PHY header. This is not limited in embodiments of this application.

In another possible implementation, the PPDU is any PPDU in PPDUs of a plurality of users. It may be understood that, if different users use different MCSs (different modulation schemes in the MCSs are mainly considered) during multi-user transmission, first information (for example, a constellation shaping mode index) may need to be exchanged for each user, one piece of first information is used to index a probability of one or more constellation points of constellation shaping of a PPDU of one user. For example, the PPDU is an EHT PPDU. If a same constellation point probability distribution is used for constellation shaping of a plurality of users, first information (for example, a constellation shaping mode index) may be placed in a common field (Common field) of EHT-SIG. If different constellation point probability distributions are used for constellation shaping of a plurality of users, first information (for example, a constellation shaping mode index) of each user may be considered to be placed in a user specific field (User Specific field) of EHT-SIG of the user.

In a possible implementation, the physical layer header of the PPDU may further include seventh information, and the seventh information may indicate whether constellation shaping is performed on the PPDU. For example, when the seventh information is a first value, it indicates that constellation shaping is performed on the PPDU; or when the seventh information is a second value, it indicates that constellation shaping is not performed on the PPDU. For example, the seventh information may be in any one of the following fields: a U-SIG field, an HE-SIG-A/HE-SIG-B field, an EHT-SIG field, or a future UHR-SIG field. For example, the seventh information is 1 bit.

In short, in this embodiment of this application, whether probability shaping is performed on the PPDU and the probability of the one or more constellation points of constellation shaping of the PPDU may be exchanged via the PHY header of the PPDU.

In a possible implementation, after receiving the PPDU, the second communication apparatus may remove a guard interval (GI) from the PPDU, perform serial-to-parallel conversion, restore a modulation symbol sequence from the received PPDU through a DFT operation, and then obtain a sensing result based on the modulation symbol sequence. In addition, the second communication apparatus may further perform constellation shaping dematching on the modulation symbol sequence based on an indication of the first information, to obtain communication data. It may be understood that constellation shaping dematching is an inverse process of constellation shaping. Details are not described herein. For example, for specific implementation of constellation shaping, refer to the descriptions of the embodiment shown in FIG. 5 or FIG. 11. Details are not described herein again.

In a possible implementation, before the first communication apparatus sends the PPDU (that is, before step S402), the first communication apparatus sends or receives a message B, where the message B may be used to request to enable a constellation shaping function. For example, the message B may be a frame in a Wi-Fi communication system. For example, when the first communication apparatus sends the message B to request to enable the constellation shaping function, after receiving the message B, the second communication apparatus may send a message C (namely, a second message) to the first communication apparatus. The message C may include sixth information, where the sixth information may indicate whether the second communication apparatus agrees to enable the constellation shaping function. Certainly, after receiving the message B, the second communication apparatus may not reply with the message C, but agrees by default to enable the constellation shaping function. Alternatively, when the second communication apparatus sends the message B to request to enable the constellation shaping function, after receiving the message B, the first communication apparatus may send the PPDU to the second communication apparatus, where the PPDU carries the first information, to implicitly or explicitly indicate that the constellation shaping function is agreed to be enabled. Certainly, the first communication apparatus may further return another message to the second communication apparatus, to indicate that the constellation shaping function is agreed to be enabled; and then send the PPDU to the second communication apparatus. For specific implementation of the message B, the message C, and the sixth information, refer to related descriptions of Implementation 1 in the embodiment shown in FIG. 15. Details are not described herein again.

In a possible implementation, the message B may include one or more of the following: third information, fourth information, or fifth information. For meanings and specific implementations of the third information, the fourth information, and the fifth information, refer to related descriptions in the embodiment shown in FIG. 15. Details are not described herein again.

In a possible implementation, after step S403, the first communication apparatus or the second communication apparatus may disable the constellation shaping function via a message D (namely, a third message). For example, after step S403, the first communication apparatus or the second communication apparatus may send the message D, where the message D may be used to disable the constellation shaping function. For specific implementation of the message D, refer to related descriptions of Implementation 1 in the embodiment shown in FIG. 15. Details are not described herein again.

It may be understood that, after the constellation shaping function is disabled, the physical layer header of the PPDU sent by the first communication apparatus or the second communication apparatus does not need to carry the first information. For example, a location at which the first information is carried in the physical layer header of the PPDU is set to a reserved location. Certainly, the first information may alternatively be carried, but a side that receives the PPDU no longer senses the first information, or a side that receives the PPDU ignores the first information.

In this embodiment of this application, the first information is carried in the physical layer header of the communication-sensing PPDU, to indicate the probability of the constellation point of constellation shaping of the communication-sensing PPDU. This can improve sensing performance while communication performance is considered.

The foregoing content describes in detail the methods provided in this application. To facilitate implementation of the foregoing solutions in embodiments of this application, embodiments of this application further provide corresponding apparatuses or devices.

In this application, the communication apparatus is divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely logic function division. During actual implementation, another division manner may be used. The following describes in detail communication apparatuses in embodiments of this application with reference to FIG. 19 to FIG. 21.

FIG. 19 is a diagram of a structure of a communication apparatus according to an embodiment of this application. As shown in FIG. 19, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface, a communication unit, or the like.

In some embodiments of this application, the communication apparatus may be the first communication apparatus shown above. In other words, the communication apparatus shown in FIG. 19 may be configured to perform steps, functions, or the like performed by the first communication apparatus in the foregoing method embodiments. For example, the communication apparatus may be the first communication apparatus or a chip, a functional module, or the like disposed in the first communication apparatus. This is not limited in embodiments of this application. The transceiver unit 10 is configured to perform a receiving/sending-related operation of the first communication apparatus in the foregoing method embodiments, and the processing unit 20 is configured to perform a processing-related operation of the first communication apparatus in the foregoing method embodiments.

For example, the processing unit 20 is configured to generate first information, where the first information indicates a probability of one or more constellation points of constellation shaping. The transceiver unit 10 is configured to send the first information.

It may be understood that the transceiver unit 10 may send the first information to another communication apparatus, or the transceiver unit 10 outputs the first information from the processing unit 20 to another component, another functional module, or the like in the communication apparatus. Related descriptions of outputting other information by the transceiver unit are similar. Details are not described below again.

For example, the transceiver unit 10 is specifically configured to send a first message, where the first message includes the first information, and the first message is used to request to enable a constellation shaping function.

For example, the transceiver unit 10 is further configured to send a first message, where the first message is used to request to enable a constellation shaping function.

For example, the transceiver unit 10 is further configured to receive a second message, where the second message includes sixth information, and the sixth information indicates whether the second communication apparatus agrees to enable the constellation shaping function.

It may be understood that the transceiver unit 10 may receive the second message from another communication apparatus, or the transceiver unit 10 inputs the second message from another component or another functional module in the communication apparatus. Related descriptions of inputting other information by the transceiver unit are similar. Details are not described below again.

For example, the transceiver unit 10 is further configured to send or receive a third message, where the third message is used to disable the constellation shaping function.

For example, the transceiver unit 10 is further configured to send or receive a fourth message. When a modulation scheme used for the fourth message is a first modulation scheme, it indicates that constellation shaping is performed on the fourth message.

For example, the transceiver unit 10 is further configured to send or receive a fourth message, where the fourth message includes indication information, and the indication information indicates whether constellation shaping is performed on the fourth message.

For specific descriptions of the first message, the first information, the second message, the third message, the fourth message, and the like, refer to the method embodiments shown above. Details are not described herein again.

It may be understood that specific descriptions of the transceiver unit and the processing unit that are described in embodiments of this application are merely examples. For specific functions, performed steps, or the like of the transceiver unit and the processing unit, refer to the method embodiments. Details are not described herein. For example, the transceiver unit 10 may be configured to perform step S302 (and step S304) shown in FIG. 15 or step S402 shown in FIG. 18. The processing unit 20 may be configured to: perform step S301 shown in FIG. 15, or perform step S401 shown in FIG. 18, or perform step S101 to step S103 shown in FIG. 5, or perform step S201 to step S203 shown in FIG. 11.

FIG. 19 is reused. In some other embodiments of this application, the communication apparatus may be the second communication apparatus shown above. In other words, the communication apparatus shown in FIG. 19 may be configured to perform steps, functions, or the like performed by the second communication apparatus in the foregoing method embodiments. For example, the communication apparatus may be the second communication apparatus or a chip, a functional module, or the like disposed in the second communication apparatus. This is not limited in embodiments of this application. The transceiver unit 10 is configured to perform a receiving/sending-related operation of the second communication apparatus in the foregoing method embodiments, and the processing unit 20 is configured to perform a processing-related operation of the second communication apparatus in the foregoing method embodiments.

For example, the transceiver unit 10 is configured to receive first information, where the first information indicates a probability of one or more constellation points of constellation shaping. The processing unit 20 is configured to process the first information.

For example, the transceiver unit 10 is specifically configured to receive a first message, where the first message includes the first information, and the first message is used to request to enable a constellation shaping function.

For example, the transceiver unit 10 is further configured to receive a first message, where the first message is used to request to enable a constellation shaping function.

For example, the transceiver unit 10 is further configured to send a second message, where the second message includes sixth information, and the sixth information indicates whether the second communication apparatus agrees to enable the constellation shaping function.

For example, the transceiver unit 10 is further configured to receive or send a third message, where the third message is used to disable the constellation shaping function.

For example, the transceiver unit 10 is further configured to receive or send a fourth message. When a modulation scheme used for the fourth message is a first modulation scheme, it indicates that constellation shaping is performed on the fourth message.

For example, the transceiver unit 10 is further configured to receive or send a fourth message, where the fourth message includes indication information, and the indication information indicates whether constellation shaping is performed on the fourth message.

For specific descriptions of the first message, the first information, the second message, the third message, the fourth message, and the like, refer to the method embodiments shown above. Details are not described herein again.

It may be understood that specific descriptions of the transceiver unit and the processing unit that are described in embodiments of this application are merely examples. For specific functions, performed steps, or the like of the transceiver unit and the processing unit, refer to the method embodiments. Details are not described herein. For example, the transceiver unit 10 may be configured to: receive the message A sent in step S302 (and the fourth message sent in step S304) in FIG. 15, or receive the PPDU sent in step S402 in FIG. 18. The processing unit 20 may be configured to: perform step S303 (and step S305) shown in FIG. 15, or perform step S403 shown in FIG. 18, or perform step S101 to step S103 shown in FIG. 5, or perform step S201 to step S203 shown in FIG. 11.

The foregoing describes the communication apparatus in embodiments of this application, and the following describes a possible product form of the communication apparatus. It should be understood that any product in any form that has a function of the communication apparatus in FIG. 19 falls within the protection scope of embodiments of this application. It should be further understood that the following description is merely an example, and does not limit a product form of the communication apparatus in embodiments of this application.

In a possible implementation, in the communication apparatus shown in FIG. 19, the processing unit 20 may be one or more processors. The transceiver unit 10 may be a transceiver, or the transceiver unit 10 may be a sending unit and a receiving unit. The sending unit may be a transmitter, and the receiving unit may be a receiver. The sending unit and the receiving unit are integrated into one device, for example, a transceiver. In embodiments of this application, the processor and the transceiver may be coupled, or the like. A manner of a connection between the processor and the transceiver is not limited in embodiments of this application. In a process of performing the foregoing method, a process of sending information (for example, sending the first information) in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information (for example, receiving the first information) in the foregoing method may be understood as a process of receiving the input information by the processor. When the processor receives the input information, the transceiver receives the information, and inputs the information into the processor. Further, after the transceiver receives the information, other processing may further need to be performed on the information before processed information is input into the processor.

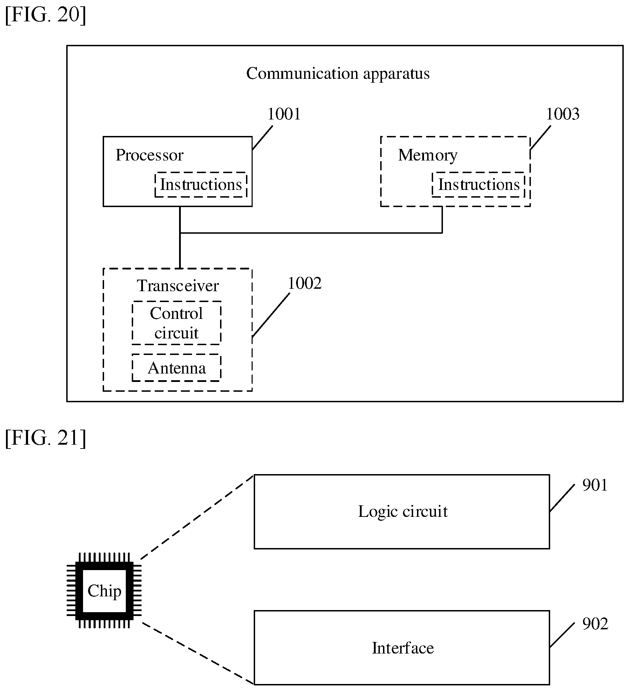

FIG. 20 is a diagram of another structure of a communication apparatus according to an embodiment of this application. The communication apparatus may be a first communication apparatus, a second communication apparatus, or a chip in the first communication apparatus or the second communication apparatus. The communication apparatus may be configured to implement the method described in the foregoing method embodiment. For details, refer to the description in the foregoing method embodiment. FIG. 20 shows only main components of the communication apparatus. The communication apparatus includes one or more processors 1001, and may further include a transceiver 1002. The communication apparatus may further include a memory 1003. The communication apparatus may further include an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 is mainly configured to exchange information between the communication apparatus and the outside. The transceiver 1002 may be implemented via an input/output circuit. Alternatively, the transceiver 1002 may include a control circuit and an antenna. The control circuit is mainly configured to: perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the steps, methods, or functions in the method embodiment 1, the processor 1001 may be configured to perform step S101 to step S103 in FIG. 5, and/or may be configured to perform another process of the technology described in this specification.

For example, when the communication apparatus is configured to perform the steps, methods, or functions in the method embodiment 2, the processor 1001 may be configured to perform step S201 to step S203 in FIG. 11, and/or may be configured to perform another process of the technology described in this specification.

For example, when the communication apparatus is configured to perform the steps, methods, or functions performed by the first communication apparatus in the method embodiment 3, the processor 1001 may be configured to perform step S301 in FIG. 15, and/or may be configured to perform another process of the technology described in this specification. The transceiver 1002 may be configured to perform step S302 and step S304 in FIG. 15, and/or may be configured to perform another process of the technology described in this specification.

For example, when the communication apparatus is configured to perform the steps, methods, or functions performed by the second communication apparatus in the method embodiment 3, the processor 1001 may be configured to perform step S303 and step S305 in FIG. 15, and/or may be configured to perform another process of the technology described in this specification. The transceiver 1002 may be configured to receive the message A sent in step S302 and the fourth message sent in step S304 in FIG. 15, and/or may be configured to perform another process of the technology described in this specification.

For example, when the communication apparatus is configured to perform the steps, methods, or functions performed by the first communication apparatus in the method embodiment 4, the processor 1001 may be configured to perform step S401 in FIG. 18, and/or may be configured to perform another process of the technology described in this specification. The transceiver 1002 may be configured to perform step S402 in FIG. 18, and/or may be configured to perform another process of the technology described in this specification.

For example, when the communication apparatus is configured to perform the steps, methods, or functions performed by the second communication apparatus in the method embodiment 4, the processor 1001 may be configured to perform step S403 in FIG. 18, and/or may be configured to perform another process of the technology described in this specification. The transceiver 1002 may be configured to receive the PPDU sent in step S402 in FIG. 18, and/or may be configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be fixed in the processor 1001. In this case, the processor 1001 may be implemented by hardware.

In an implementation, the communication apparatus may include a circuit. The circuit may implement the sending, receiving, or communication function in the method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide semiconductor (N-channel Metal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in embodiments of this application may further have more components than those shown in FIG. 20, and the like. This is not limited in embodiments of this application. The foregoing methods performed by the processor and the transceiver are merely examples. For specific steps performed by the processor and the transceiver, refer to the descriptions in the method embodiments.

In another possible implementation, in the communication apparatus shown in FIG. 19, the processing unit 20 may be one or more logic circuits, and the transceiver unit 10 may be an input/output interface that is also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 21 is a diagram of still another structure of a communication apparatus according to an embodiment of this application. As shown in FIG. 21, the communication apparatus shown in FIG. 21 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 21 shows an example in which the communication apparatus is a chip. The chip includes the logic circuit 901 and the interface 902.

In this embodiment of this application, the logic circuit and the interface may be further coupled to each other. A specific manner of a connection between the logic circuit and the interface is not limited in embodiments of this application.

For example, when the communication apparatus is configured to perform the methods, functions, or steps performed by the first communication apparatus in the foregoing method embodiments, the logic circuit 901 is configured to generate first information, where the first information indicates a probability of one or more constellation points of constellation shaping. The interface 902 is configured to output the first information.

For example, when the communication apparatus is configured to perform the methods, functions, or steps performed by the first communication apparatus in the foregoing method embodiments, the interface 902 is configured to input first information, where the first information indicates a probability of one or more constellation points of constellation shaping. The logic circuit 901 is configured to process the first information.

It may be understood that, for specific descriptions of the first information, constellation shaping, the probability of the constellation point, and the like, refer to the foregoing method embodiment. Details are not described herein again.

It may be understood that the communication apparatus shown in this embodiment of this application may implement the method provided in embodiments of this application in a form of hardware, or may implement the method provided in embodiments of this application in a form of software. This is not limited in embodiments of this application.

For specific implementations of the embodiment shown in FIG. 21, refer to the foregoing embodiments. Details are not described herein again.

An embodiment of this application further provides a wireless communication system. The wireless communication system includes a first communication apparatus and/or a second communication apparatus. The first communication apparatus and the second communication apparatus may be configured to perform the method in any one of the foregoing embodiments.

In addition, this application further provides a computer program. The computer program is configured to implement operations and/or processing that are/is performed by the first communication apparatus in the methods provided in this application.

This application further provides a computer program. The computer program is configured to implement operations and/or processing that are/is performed by the second communication apparatus in the method provided in this application.

This application further provides a computer-readable storage medium. The computer-readable storage medium stores computer code. When the computer code is run on a computer, the computer is enabled to perform operations and/or processing that are/is performed by the first communication apparatus in the method provided in this application.

This application further provides a computer-readable storage medium. The computer-readable storage medium stores computer code. When the computer code is run on a computer, the computer is enabled to perform operations and/or processing that are/is performed by the second communication apparatus in the method provided in this application.

This application further provides a computer program product. The computer program product includes computer code or a computer program. When the computer code or the computer program is run on a computer, operations and/or processing that are/is performed by the first communication apparatus in the method provided in this application.

This application further provides a computer program product. The computer program product includes computer code or a computer program. When the computer code or the computer program is run on a computer, operations and/or processing that are/is performed by the second communication apparatus in the method provided in this application,

In the several embodiments provided in this application, it should be understood that the disclosed system, apparatus, and method may be implemented in another manner. For example, the described apparatus embodiments are merely examples. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located at one location, or may be distributed on a plurality of network units. Some or all of the units may be selected based on an actual requirement to achieve the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first communication apparatus, first information, wherein the first information indicates a probability of one or more constellation points of constellation shaping; and
sending, by the first communication apparatus, the first information.

2. The method according to claim 1, wherein sending, by the first communication apparatus, the first information comprises:
sending, by the first communication apparatus, a first message, wherein the first message comprises the first information, and the first message is used to request to enable a constellation shaping function.

3. The method according to claim 1, wherein before sending, by the first communication apparatus, the first information, the method further comprises: sending, by the first communication apparatus, a first message, wherein the first message is used to request to enable a constellation shaping function.

4. The method according to claim 2, wherein the first message further comprises second information, and the second information indicates one or more modulation schemes; and
the first information specifically indicates a probability of one or more constellation points of constellation shaping in the one or more modulation schemes.

5. The method according to any one of claims 2 to 4, wherein the first message further comprises one or more of the following: third information, fourth information, or fifth information, wherein
the third information indicates to enable the constellation shaping function, the fourth information indicates duration of enabling the constellation shaping function, and the fifth information indicates a number of physical layer protocol data units PPDUs using the constellation shaping function.

6. The method according to any one of claims 2 to 5, wherein after sending, by the first communication apparatus, the first message, the method further comprises: receiving, by the first communication apparatus, a second message, wherein the second message comprises sixth information, and the sixth information indicates whether the second communication apparatus agrees to enable the constellation shaping function.

7. The method according to claim 6, wherein the first message is a sensing measurement request frame, and the second message is a sensing measurement response frame.

8. The method according to any one of claims 2 to 7, wherein after sending, by the first communication apparatus, the first message, the method further comprises: sending or receiving, by the first communication apparatus, a third message, wherein the third message is used to disable the constellation shaping function.

9. The method according to any one of claims 1 to 8, wherein after sending, by the first communication apparatus, the first information, the method further comprises:
sending or receiving, by the first communication apparatus, a fourth message, wherein when a modulation scheme used for the fourth message is a first modulation scheme, it indicates that constellation shaping is performed on the fourth message.

10. The method according to any one of claims 1 to 8, wherein after sending, by the first communication apparatus, the first information, the method further comprises:
sending or receiving, by the first communication apparatus, a fourth message, wherein the fourth message comprises indication information, and the indication information indicates whether constellation shaping is performed on the fourth message.

11. The method according to claim 9, wherein the fourth message is a physical layer protocol data unit PPDU, the modulation scheme used for the PPDU is the first modulation scheme, and a physical layer payload of the PPDU comprises a modulation symbol obtained by performing constellation shaping on a bitstream based on a probability of one or more constellation points in the first modulation scheme indicated by the first information.

12. The method according to claim 10, wherein the fourth message is a physical layer protocol data unit PPDU, the indication information indicates that constellation shaping is performed on the PPDU, a modulation scheme used for the PPDU is a first modulation scheme, and a physical layer payload of the PPDU comprises a modulation symbol obtained by performing constellation shaping on a bitstream based on a probability of one or more constellation points in the first modulation scheme indicated by the first information.

13. The method according to any one of claims 1 to 12, wherein the probability of the one or more constellation points of constellation shaping is predefined or determined based on a predefined probability range.

14. A communication method, comprising:
receiving, by a second communication apparatus, first information, wherein the first information indicates a probability of one or more constellation points of constellation shaping; and
processing, by the second communication apparatus, the first information.

15. The method according to claim 14, wherein receiving, by the second communication apparatus, the first information comprises:
receiving, by the second communication apparatus, a first message, wherein the first message comprises the first information, and the first message is used to request to enable a constellation shaping function.

16. The method according to claim 14, wherein before receiving, by the second communication apparatus, the first information, the method further comprises: receiving, by the second communication apparatus, a first message, wherein the first message is used to request to enable a constellation shaping function.

17. The method according to claim 15, wherein the first message further comprises second information, and the second information indicates one or more modulation schemes; and
the first information specifically indicates a probability of one or more constellation points of constellation shaping in the one or more modulation schemes.

18. The method according to any one of claims 15 to 17, wherein the first message further comprises one or more of the following: third information, fourth information, or fifth information, wherein
the third information indicates to enable the constellation shaping function, the fourth information indicates duration of enabling the constellation shaping function, and the fifth information indicates a number of physical layer protocol data units PPDUs using the constellation shaping function.

19. The method according to any one of claims 15 to 18, wherein after receiving, by the second communication apparatus, the first message, the method further comprises:
sending, by the second communication apparatus, a second message, wherein the second message comprises sixth information, and the sixth information indicates whether the second communication apparatus agrees to enable the constellation shaping function.

20. The method according to claim 19, wherein the first message is a sensing measurement request frame, and the second message is a sensing measurement response frame.

21. The method according to any one of claims 15 to 20, wherein after receiving, by the second communication apparatus, the first message, the method further comprises:
receiving or sending, by the second communication apparatus, a third message, wherein the third message is used to disable the constellation shaping function.

22. The method according to any one of claims 14 to 21, wherein after receiving, by the second communication apparatus, the first information, the method further comprises:
receiving or sending, by the second communication apparatus, a fourth message, wherein when a modulation scheme used for the fourth message is a first modulation scheme, it indicates that constellation shaping is performed on the fourth message.

23. The method according to any one of claims 14 to 21, wherein after receiving, by the second communication apparatus, the first information, the method further comprises:
receiving or sending, by the second communication apparatus, a fourth message, wherein the fourth message comprises indication information, and the indication information indicates whether constellation shaping is performed on the fourth message.

24. The method according to claim 22, wherein the fourth message is a physical layer protocol data unit PPDU, the modulation scheme used for the PPDU is the first modulation scheme, and a physical layer payload of the PPDU comprises a modulation symbol obtained by performing constellation shaping on a bitstream based on a probability of one or more constellation points in the first modulation scheme indicated by the first information.

25. The method according to claim 23, wherein the fourth message is a physical layer protocol data unit PPDU, the indication information indicates that constellation shaping is performed on the PPDU, a modulation scheme used for the PPDU is a first modulation scheme, and a physical layer payload of the PPDU comprises a modulation symbol obtained by performing constellation shaping on a bitstream based on a probability of one or more constellation points in the first modulation scheme indicated by the first information.

26. The method according to any one of claims 14 to 25, wherein the probability of the one or more constellation points of constellation shaping is predefined or determined based on a predefined probability range.

27. A communication apparatus, comprising a unit or a module configured to perform the method according to any one of claims 1 to 26.

28. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 26 through a logic circuit or by executing code instructions.

29. A wireless communication system, comprising a first communication apparatus configured to perform the method according to any one of claims 1 to 13, and/or a second communication apparatus configured to perform the method according to any one of claims 14 to 26.

30. A readable storage medium, wherein the readable storage medium is configured to store a computer program, and when the computer program is executed by a processor, a communication apparatus comprising the processor is enabled to perform the method according to any one of claims 1 to 26.
